(19) Europäisches Patentamt
European Patent Office
Office européen des brevets

(11) **EP 4 101 823 A1**

(12) **EUROPÄISCHE PATENTANMELDUNG**

(43) Veröffentlichungstag:
**14.12.2022 Patentblatt 2022/50**

(21) Anmeldenummer: **22178302.0**

(22) Anmeldetag: **10.06.2022**

(51) Internationale Patentklassifikation (IPC):
**C04B 20/00** (2006.01)   **C04B 28/04** (2006.01)
**C04B 103/00** (2006.01)   **C04B 111/00** (2006.01)

(52) Gemeinsame Patentklassifikation (CPC):
(C-Sets verfügbar)
**C04B 20/0076; C04B 28/04;** C04B 2103/004;
C04B 2111/00905                              (Forts.)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **10.06.2021   DE 102021114940**

(71) Anmelder: **Borex GmbH & Co. KG**
**48619 Heek (DE)**

(72) Erfinder:
• **BÜSCHER, Hans-Jürgen**
  **48599 Gronau-Epe (DE)**
• **BÜSCHER, Wolfgang**
  **48599 Gronau-Epe (DE)**

(74) Vertreter: **Riebling, Peter**
**Patentanwalt**
**Postfach 31 60**
**88113 Lindau (DE)**

(54) **ZUSCHLAGSTOFF UND VERFAHREN ZUR HERSTELLUNG VON MASSIVBAUWÄNDEN MIT EINEM RESSOURCENSCHONENDEN BAUSTOFF, INSBESONDERE ZUR HERSTELLUNG VON INNENWANDELEMENTEN**

(57)    Zuschlagstoff für Beton und Verwendung von Beton-Recyclat als Zuschlagstoff für Beton bestehend aus Bauwerksbruch mit einer Gesteinskörnung (20, 21) definierter Größe wobei ein Ersatz von Naturgestein, wie Sand und Kies durch eine Gesteinskörnung (20, 21) erfolgt, die aus einem Anteil im Bereich von 50 bis 100 % Bauwerksbruch vom Typ 2 und/oder Typ 3 nach DIN 4226-101 besteht.

Fig. 1

EP 4 101 823 A1

(52) Gemeinsame Patentklassifikation (CPC): (Forts.)

C-Sets
**C04B 20/0076, C04B 18/167;**
**C04B 28/04, C04B 18/167**

**Beschreibung**

Gegenstand der Erfindung ist ein Zuschlagstoff und ein Verfahren zur Herstellung von Massivbauwänden mit einem ressourcenschonenden Baustoff, insbesondere zur Herstellung von tragenden und nicht tragenden Innenwandelementen nach dem Oberbegriff des Patentanspruches 1, sowie ein Baustoff mit Verwendung des Zuschlagstoffes. Dabei wird es bevorzugt, wenn die oben genannten Gegenstände den Normen nach DIN EN 206-1 [R4] und DIN 1045-2 [R1] entsprechen.

Die in den obigen eckigen Klammern gesetzten Referenzzahlen [R1] und [R4] beziehen sich auf die später definierten Regelwerke im Abschnitt "Regelwerke und Vorschriften".

Die wachsenden Anforderungen an die Recyclingfähigkeit und damit die Verwertung am Nutzungsende von Bauprodukten sowie die Frage der Ressourceneffizienz steht im Mittelpunkt des vom Bundeskabinett im März 2012 beschlossenen Ressourceneffizienzprogramms. So soll die Einsatzquote von Recycling-Gesteinskörnungen bei der Betonherstellung bis 2030 deutlich erhöht werden.

Beton besteht zu etwa 70 Vol.-% aus Gesteinskörnung. Aus diesem Grund besteht in der Bauindustrie ein großer Bedarf an kostengünstiger und qualitativ hochwertiger Gesteinskörnung. Dieser Bedarf kann weitestgehend durch natürliche Vorkommen befriedigt werden. Da auch die größten Vorkommen endlich sind und kein unnötiger Raubbau betrieben werden soll, sind sowohl das Recycling aus Bauschutt wie auch der Einsatz industrieller Nebenprodukte Möglichkeiten, um Produkte zu erhalten, die die natürlichen Quellen zumindest teilweise ersetzen können.

Aufgrund von Abriss- und Aushubtätigkeiten fallen jedes Jahr große Mengen von Baureststoffen an. Nach dem Bodenaushub mit rd. 200 Mio. t/a macht dabei der Bauschutt den mengenmäßig größten Anteil aus. Auf die Recycling-Gesteinskörnungen wird ausführlich in der Mastervorlesung "Anorganische Bindemittel und Betontechnologie" eingegangen.

Die Eigenschaften des aufbereiteten Bauschutts (Recycling-Gesteinskörnung) variieren naturgemäß in der Zusammensetzung. Daher ist die Eingrenzung der Haupt- und Nebenbestandteile eine wichtige Voraussetzung für genügend gleichmäßige und damit kalkulierbare Eigenschaften. Recycling-Gesteinskörnungen für Beton müssen grundsätzlich nach ihrer Herkunft sowie der anteiligen stofflichen Zusammensetzung den Anforderungen der DIN EN 12620 [3] genügen (Tabelle 6).

Im Vordergrund der Erfindung steht die Anwendung von mit Abfallstoffen versetzten Gesteinskörnungen des Typs 2 nach Tabelle 1 oder der mit noch weiteren Abfallstoffen versetzten Gesteinskörnung des Typs 3 entsprechend der nachfolgenden Tabelle 1 und/oder der Tabelle 8.

Die stoffliche Zusammensetzung muss nach DIN EN 933-11 bestimmt und als Kategorien nach DIN EN 12620:2008-07 angegeben werden. Es gelten die Anforderungen für die Typen nach Tabelle 1.

Die Typen 1 und 2 sind nach DIN EN 206-1:2001-07, DIN EN 206-1/A1:2004-10, DIN EN 206-1/A2:2005-09 in Verbindung mit DIN 1045-2:2008-08 und DAfStb Beton, rezyklierte Gesteinskörnung geregelt. Im Falle von Differenzen gilt für die Typen 1 und 2 die Festlegung in DIN 1045-2:2008-08 in Verbindung mit DAfStb Beton, rezyklierte Gesteinskörnung. Die in der Tabelle im tiefgestellten Index angegebenen Zahlenwerte sind Mengenangaben in Gew.-% des angegebenen Stoffs.

**Tabelle 1:** Bestandteile recyclierter Gesteinskörnung nach DIN EN 12620 [3] und deren Beschreibung.

| Tabelle 1- Stoffliche Zusammensetzung der Typen rezyklierter Gesteinskörnungen | | | | | |
|---|---|---|---|---|---|
| Spalte | 1 | 2 | 3 | 4 | 5 |
| Zeile | Bestandteile[a] | Kategorien der Bestandteile rezyklierter Gesteinskörnung | | | |
| | | Typ 1 | Typ 2 | Typ 3 | Typ 4 |
| | | für Beton nach DIN 1045-2: 2008-08 | | für Beton außerhalb DIN 1045-2:2008-08 | |
| 1 | Rc + Ru | $Rcu_{90}$ | $Rcu_{70}$ | $Rcu_{20-c}$ | $Rcu + Rb_{80}{}^{c}$ |
| 2 | Rb | $Rb_{10-}$ | $Rb_{30-}$ | $Rb_{80}{}^{b}$ | |
| 3 | Ra | $Ra_{1-}$ | $Ra_{1-}$ | $Ra_{1-}$ | $Ra_{20-}$ |
| 4 | X+Rg | $X Rg_{1-}$ | $X Rg_{2-}$ | $X Rg_{2-}$ | $X Rg_{2-}$ |
| 5 | $FL^{d}$ | $FL_{2-}$ | $FL_{2-}$ | $FL_{2-}$ | $FL_{5-}$ |
| a     Dabei bedeuten: Rc          Beton, Betonprodukte, Mörtel, Mauersteine aus Beton | | | | | |

(fortgesetzt)

| Tabelle 1- Stoffliche Zusammensetzung der Typen rezyklierter Gesteinskörnungen | |
|---|---|
| Ru | Ungebundene Gesteinskörnung, Naturstein, hydraulisch gebundene Gesteinskörnung |
| Rb | Ziegel-Mauersteine (nicht porosiert), Klinker, Steinzeug, Kalksandstein-Mauersteine, Verschiedene Mauer- und Dachziegel, Bimsbeton (Leichtbeton), nicht schwimmender Porenbeton |
| Ra | Bitumenhaltige Materialien, Asphalt |
| Rg | Glas |
| X | Sonstige Materialien: Bindige Materialien (d.h. Ton und Bodenmaterial), verschiedene sonstige Materialien: Metalle (Eisen und Nichteisenmetalle), nicht schwimmendes Holz, Kunststoff, Gummi, Gips |
| FL | Schwimmendes Material im Volumen |
| b | Der Anteil von Kalksandstein ist auf maximal 5 % Massenanteil begrenzt, Rb darf dann 85 % Massenanteil betragen. |
| c | als Kategorie "angegeben". |
| d | Wenn besondere Oberflächeneigenschaften des Betons erforderlich sind, kann die Vereinbarung niedrigerer Gehalte an aufschwimmenden Bestandteilen angezeigt sein (siehe DIN EN 12620:2008-07). |

| Bestandteil | Beschreibung |
|---|---|
| $R_C$ | Beton, Betonprodukte, Mörtel Mauersteine aus Beton |
| $R_U$ | Ungebundene Gesteinskörner, Naturstein, hydraulisch gebundene Gesteinskörner |
| $R_B$ | Mauer- und Dachziegel aus gebranntem Ton Kalksandsteine Gasbetonsteine (nicht schwimmend) |
| $R_A$ | Bitumenhaltige Materialien |
| $F_L$ | Schwimmendes Material im Volumen |
| X | Sonstige Materialien: Bindige Materialien (d. h. Ton, Erde) Verschiedene sonstige Materialien: (eisenhaltige und nicht eisenhaltige) Metalle, nicht schwimmendes Holz, Kunststoff, Gummi Gips |
| G | Glas |

Zuschlagstoffe und deren Zusammensetzungen sind aus den Druckschriften DE 20 2018 105 762 U1, DE 200 01 754 U1, DE 20 2015 100 064 U1 und CH 687 875 A5 bekannt.

In der Druckschrift BÖDEFELD, Jörg; RESCHKE, Thorsten: Verwendung von Beton mit rezyklierten Gesteinskörnungen bei Verkehrswasserbauten; Bautechnische und geotechnische Aspekte beim Schleusenbau, 2011, Nr. 93, S. 40-60 werden Betonarten mit unterschiedlichen Anteilen von RC-Beton diskutiert, jedoch nicht eine RC-Gesteinskörnung verschiedener Typenklassen angegeben.

In der Druckschrift Beton:Wiki: Rezyklierte Gesteinskörnung. Stand vom 22.11.221; URL. https://www.beton.wiki/indexphp?title=Rezyklierte Gesteinskörnung werden verschiedene Zusammensetzungen von RC-Beton diskutiert. Die Kombination verschiedener RC-Gesteinskörnungen und die Herstellung von Beton aus 100% rezyklierten Gesteinskörnungen sind aus dieser Druckschrift nicht zu entnehmen.

Mit dem Gegenstand der DE 10 2018 120 331 B3 ist ein Zuschlagstoff für Beton und Verwendung von Beton-Recyclat als Zuschlagstoff für Beton bekannt geworden.

Dabei ist es bekannt, Beton-Recyclat aus Bauten-Abriss als Zuschlagstoff für neuen, frischen Beton zu nutzen. Die genannte Druckschrift geht davon aus, dass ein idealer Zuschlagstoff für Beton ein die Festigkeit des Betons nicht beeinflussendes Füllmittel ist, das durch das Bindemittel aus gemahlenem Zementklinker, Betonzusatzstoffe und Betonzusatzmitteln gebunden wird. Es wurde erkannt, dass Sand unterschiedlicher Provenienz als Zuschlagstoff einen erheblichen Einfluss auf die Betonfestigkeit hat. Die Sandprovenienz bestimmt deshalb die chemische Zusammensetzung des Zuschlagstoffes, die Korngrößenverteilung und auch die Kornform. Die genannte Druckschrift hat festgestellt, dass die Art der Herstellung des Beton-Recyclats einen erheblichen Einfluss auf die spätere Betonqualität des neuen, mit dem Beton-Recyclat hergestellten Frischbetons und dem späteren abgebundenen Beton hat.

Dazu wird vorgeschlagen, dass das Beton-Recyclat in einer Hochdruckrollenpresse gebrochen wird und in einer zweiten Stufe die Agglomerate durch eine weitere mechanische Beanspruchung auf einen bestimmten Korngrößen-Bereich zerstört werden. Die genannte Druckschrift hat jedoch keine Erkenntnisse über die optimale Korngröße bei der Herstellung eines Beton-Recyclats.

Dementsprechend hat die Erfindung folgende Ziele:

1. Entwicklung von ressourceneffizienten Wandelementen auf der Basis von Mauerwerksbruch für tragende- und nichttragende Innenbauteile im Sinn einer innovativen Werkstoffentwicklung.

2. Entwicklung von Low-Cost-Bausystemen für den kostengünstigen Wohnungsbau

3. Nutzung von Mauerwerksbruch als Rohstoffkomponente,

4. Einsparung von nichterneuerbaren Rohstoffressourcen wie natürliche Gesteine

5. Schutz der Umwelt durch Ressourceneinsparung und Schließung von Stoffkreisläufen

Um die nachhaltige und effiziente Materialverwendung in der Entwicklung von Betonfertigteilen durchsetzen zu können, müssen die technischen Voraussetzungen für die Anwendung der Abfallstoffe geschaffen werden. Dazu gehören die Entwicklung von Aufbereitungstechnologien des gemischten Bauschuttes, die Entwicklung von Betonrezepturen auf der Basis von Recyclingmaterial als Substitut für natürliche Gesteinskörnungen, einschließlich der notwendigen Performanceuntersuchungen mit dem Ziel der nachhaltigen Verbesserung der Ressourceneffizienz und Kreislaufwirtschaft. Darüber hinaus ist die angestrebte Verwertung von Mauerwerksbruch aus umweltpolitischer und wirtschaftlicher Sicht dringend erforderlich.

Weiteres Ziel der vorliegenden Erfindungsbeschreibung ist, die anmelderseitigen Erfahrungen beim Beton mir rezyklierten Gesteinskörnungen auch für andere Fertigteile nutzen zu können. Im Fokus stehen dabei "Nichttragende Fertigteil-Innenwandelemente" und "Tragende Fertigteil-Innenwandelemente", bei denen die Gesteinskörnung durch 100 % Bauwerksbruch Typ 3 nach DIN 4226-101 substituiert werden soll.

Die Angabe der Typklasse "Typ 2" oder "Typ 3" bezieht sich demnach auf die Güteklasse der Abfallstoffe entsprechend der Tabelle 1 , die jeweils im Bauwerksbruch enthalten sein dürfen. Die Typenklasse 2 bezieht sich auf Abfallstoffe, die in einem "moderaten" Anteil und einer Zusammensetzung im Bauwerksbruch enthalten sein dürfen, während die Abfallstoffe des Typs 3 die Abfallstoffe des Typs 2 mit einschließen, jedoch noch "extremere" Abfallstoffe mit größerem Mengenanteil zulässt, die bei den Abfallstoffen des Typs 2 nicht enthalten sein dürfen.

Dabei gelten folgende DIN-Normen:

DIN EN 206-1: 2001-07 bezieht sich auf Beton - Festlegung, Eigenschaften, Herstellung und Konformität

DIN 1045-2: 2008-08 bezieht sich auf Tragwerke aus Beton, Stahlbeton und Spannbeton; Teil 2: Beton - Festlegung, Eigenschaften, Herstellung und Konformität, Anwendungsregeln zu DIN EN 206-1.

DIN 4226-101:2017-08 bezieht sich auf rezyklierte Gesteinskörnungen für Beton nach DIN EN 12620-Teil 101: Typen und geregelte gefährliche Substanzen.

In DIN 4226-101 werden rezyklierte Gesteinskörnungen > 2 mm entsprechend ihrer stofflichen Zusammensetzung in 4 Typen eingeteilt. Im Beton nach DIN EN 206-1/DIN 1045-2 dürfen - bisher - nur die Abfallstoffe vom Typ 1 und Typ 2 verwendet werden. Die Vorschrift besagte, dass die Verwendung von Abfallstoffen vom Typ 3 nicht dieser Vorschrift entspricht.

Die Erfindung hat mit der technischen Lehre der unabhängigen Patentansprüche dieses Vorurteil überwunden, indem festgestellt wurde, dass auch bei einem Zuschlagstoff bestehend aus einem Bauwerksbruch mit einer Zumischung von Abfallstoffen vom Typ 2 oder von Abfallstoffen vom Typ 3 bei vollständigem Ersatz des natürlichen Baustoffs durch RC-Material trotzdem ein Beton bevorzugt nach DIN EN 206-1 hergestellt werden kann.

In überraschender Weise wurde festgestellt, dass gerade die Kombination der beiden Gesteinskörnungen vom Typ RC 0/8 und Typ RC 8/22 zu dem gewünschten überlegenen Zuschlagstoff führt, was nicht erwartbar war.

Es wird vermutet, dass die durch Brechen der RC-Grundstoffe erzielte bruchflächige Oberfläche der Gesteinskörnungen vom Typ RC 0/8 und Typ RC 8/22 zu einem besonders guten Haftverbund des so erstellten kombinatorischen Zuschlagstoffes führt.

Bei einer rauen Oberfläche ist die Haftung des Zementsteins und die Zugfestigkeit des Betons besser, andererseits aber auch der Wasseranspruch etwas größer.

Als bruchflächig gilt ein Korn, dessen Oberfläche zu mindestens 50 % aus Bruchflächen besteht. Bei Schotter, Splitt und Edelsplitt nach TL Gestein-StB müssen mindestens 90 M.-% der Körner bruchflächig sein, wobei mindestens 30 % der Körner vollständig gebrochen sein müssen. Es darf nicht mehr als 1 M.-% ungebrochene Körner enthalten sein.

Daher wird es bei der Erfindung bevorzugt, wenn die verwendeten Gesteinskörnungen eine bruchflächige Oberfläche von mindestens 50% bevorzugt jedoch 90 % aufweisen.

Die durchgeführten Versuche zeigen, dass sich auch bei vollständigem Ersatz der Gesteinskörnung durch RC-Material ein Beton bevorzugt entsprechend DIN EN 206-1 produzieren lässt, der die gestellten Anforderungen erfüllt.

Es wird vermutet, dass die erzielten, überlegenen Eigenschaften des neuen Baustoffs darauf beruhen, dass sich die feineren Gesteinspartikel der Gesteinskörnung vom Typ RC 8/22 mit der rauen Oberfläche der gröberen Gesteinspartikel vom Typ RC 0/8 verzahnen und einen besonders stabilen Verbund ergeben, sodass damit erstmals die Möglichkeit bestand, nach dem erfindungsgemäßen Verfahren aufbereiteten Bauwerksbruch des Typs 2 bevorzugt aber auch des Typs 3 mit den darin enthaltenen Abfallstoffen in einem hohen Anteil dem neuartigen Zuschlagstoff hinzuzufügen und trotzdem Betonfertigteile hoher Qualität und Tragfestigkeit zu schaffen.

Damit konnten nicht erwartbare hohe Anteile aus 50 bis 100 % Bauwerksbruch, bevorzugt 80 bis 100 %, besonders bevorzugt 100 % von abfallstoffhaltigem Bauwerksbruch der minderen Güteklasse 2 oder der noch minderen Güteklasse 3 als neuartiger Zuschlagstoff verwendet werden.

Entsprechend einer bauaufsichtlichen Zulassung ist es damit erstmals möglich, bevorzugt mehr als 50% der für die Herstellung von Betonfertigteilen benötigten Gesteinskörnung durch Recyclingmaterial zu ersetzen. Dabei wird es bevorzugt, wenn der erfindungsgemässe Zuschlagstoff aus 50 bis 100 % Bauwerksbruch, bevorzugt 80 bis 100 %, besonders bevorzugt 100 % des Typs 2 oder des Typs 3 besteht.

Aus umwelttechnischer Sicht können somit folgende Ziele erreicht werden:

- Einsparung von natürlichen Gesteinen als nichterneuerbaren Rohstoffressource

- Entlastung der Umwelt durch verminderten C02 Ausstoß infolge geringeren Transportaufwandes, da Abbruchmaterial in der näheren Umgebung verfügbar ist.

Bei den mit dem neuartigen Zuschlagstoff hergestellten Bauteilen nach der Erfindung (interne Bezeichnung "Büscher-Wand") handelt es sich ausdrücklich nicht um "Beton-Bauteile" nach DIN EN 206- 1 und DIN 1045-2, sondern um die Herstellung von Massivbauwänden mit dem neuen innovativen ressourcenschonenden Baustoff entsprechend dem unabhängigen Patentanspruch 8. Diese Massivbauwände sind dem Mauerwerk ebenbürtig, denn sie stehen den technischen, statischen und klimatischen Eigenschaften von Beton-Bauteilen in nichts nach.

Nach dem Gegenstand des unabhängigen Patentanspruchs 13 enthält ein Innenwandelement eines Büromoduls und ein Musterwandmodul einen Zuschlagstoff, der annähernd zu 100 % aus Bauwerksbruch Typ 3 besteht.

Eine andere bevorzugte Ausführung nach dem Anspruch 13 sieht eine Zuschlagstoff von bevorzugt annähernd zu 100 % aus Bauwerksbruch Typ 2 vor und schließlich sieht eine dritte Variante die Kombination der Typen 2 und 3 aus Bauwerksbruch vor, wobei die bevorzugten Mischungsverhältnisse der Typen 2 und 3 später angegeben werden. Eine bevorzugte Mischung sieht jedoch ein Verhältnis von 50 : 50 aus Typ 2 und 3 vor.

Demnach wird die bei Betonwänden geforderte Gesteinskörnung erfindungsgemäß durch annähernd 100 % Bauwerksbruch substituiert, was zu einem vollständig neuen innovativen Baustoff führt, der dem gießfähigen Beton ebenbürtig ist, aber auf natürliche Ressourcen wie Sand und Kies vollständig verzichtet. Durch diese Substitution können wertvolle Naturvorkommen von Sand und Kies geschont werden.

Damit ist erstmals die Schaffung von ressourceneffizienten Bausystemen für den seriellen und kostengünstigen Wohnungsbau unter Einsatz der erfindungsgemäßen innovativen Verwertungslösung für einen gemischten Mauerwerkabbruch möglich.

Zur Ausführung der Erfindung mussten die Auswirkungen des neuartigen Zuschlagstoffes mit der neuartigen Gesteinskörnung auf das Verformungsverhalten, Kriechen, Schwinden, E-Modul und Wärmedehnung des Betons unter Berücksichtigung von unerwünschten Beimischungen (Verunreinigungen), wie Kalkstein, Ziegeln und Gips untersucht werden, die innerhalb einer vorgegebenen Bandbreite in der neuartigen Gesteinskörnung enthalten sind.

Der mit dieser neuartigen Gesteinskörnung hergestellte Gießwerkstoff wird als Recyclingbeton (RC-Beton) bezeichnet, mit dem eine Entwicklung von ressourceneffizienten Wandelementen ("Büscher-Wand") auf Basis von Mauerwerksbruch und hydraulisch aktivierten Feinstoffen als Zementersatzstoff, vorzugsweise mit zusätzlicher Absorberschicht und Wärmedämmung auf Basis von Alttextilfasern, möglich war. Die daraus hergestellten Wandelemente werden als RC-Wandelemente bezeichnet. Es erfolgten auch Untersuchungen zum Trag- und Verformungsverhalten von Beton mit rezyklierter Gesteinskörnung nach der Erfindung.

Die nachfolgend aufgeführten Regeln und Vorschriften werden in der Erfindungsbeschreibung zum Teil auch lediglich mit der Kennzeichnung [RX] zitiert, wobei der Parameter X eine ganzzahlige natürliche Zahl ist.

Regelwerke und Vorschriften

[R1] DIN 1045-2: 2008-08 Tragwerke aus Beton, Stahlbeton und Spannbeton; Teil 2: Beton - Festlegung, Eigenschaften, Herstellung und Konformität, Anwendungsregeln zu DIN EN 206-1

[R2] DIN 4226-101:2017-08 Rezyklierte Gesteinskörnungen für Beton nach DIN EN 12620 - Teil 101: Typen und geregelte gefährliche Substanzen

[R3] DIN EN 197-1:2011-11 Zement - Teil 1: Zusammensetzung, Anforderungen und Konformitätskriterien von Normalzement

[R4] DIN EN 206-1: 2001-07 Beton - Festlegung, Eigenschaften, Herstellung und Konform ität

[R5] DIN EN 932-3:2003-12 Prüfverfahren für allgemeine Eigenschaften von Gesteinskörnungen - Teil 3: Durchführung und Terminologie einer vereinfachten petrographischen Beschreibung

[R6] DIN EN 933-1:2012-03 Prüfverfahren für geometrische Eigenschaften von Gesteinskörnungen - Teil 1: Bestimmung der Korngrößenverteilung - Siebverfahren

[R7] DIN EN 933-11:2011-05 Prüfverfahren für geometrische Eigenschaften von Gesteinskörnungen - Teil 11: Einteilung der Bestandteile in grober rezyklierter Gesteinskörnung

[R8] DIN EN 934-2:2012-08 Zusatzmittel für Beton, Mörtel und Einpressmörtel - Teil 2: Betonzusatzmittel - Definitionen, Anforderungen, Konformität, Kennzeichnung und Beschriftung

[R9] DIN EN 1008:2002-10 Zugabewasser für Beton - Festlegung für die Probenahme, Prüfung und Beurteilung der Eignung von Wasser, einschließlich bei der Betonherstellung anfallendem Wasser, als Zugabewasser für Beton

[R10] DIN EN 1097-6:2013-09 Prüfverfahren für mechanische und physikalische Eigenschaften von Gesteinskörnungen - Teil 6: Bestimmung der Rohdichte und der Wasseraufnahme

[R11] DIN EN 12350-5:2019-09 Prüfung von Frischbeton - Teil 5: Ausbreitmaß (Vorgänger 2009- 08)

[R12] DIN EN 12350-6:2019-09 Prüfung von Frischbeton - Teil 6: Frischbetonrohdichte (Vorgänger 2011-03)

[R13] DIN EN 12350-7:2019-09 Prüfung von Frischbeton - Teil 7: Luftgehalt - Druckverfahren (Vorgänger 2009-08)

[R14] DIN EN 12390-3:2019-10 Prüfung von Festbeton - Teil 3: Druckfestigkeit von Probekörpern [R15] DIN EN 12390-13:2014-06 Prüfung von Festbeton - Teil 13: Bestimmung des Elastizitätsmoduls unter Druckbelastung (Sekantenmodul

[R16] DIN CEN/TS 12390-9:2017-05; DIN SPEC 91167:2017-05 Prüfung von Festbeton - Teil 9: Frost- und Frost-Tausalz-Widerstand - Abwitterung

[R17] DAfStb-Richtlinie "Beton nach DIN EN 206-1 und DIN 1045-2 mit rezyklierten Gesteinskörnungen nach DIN EN 12620", Ausgabe 2010-09

[R18] DAfStb-Heft 400 Erläuterungen zu DIN 1045 "Beton- und Stahlbeton", Ausgabe 07.1988, Ausgabe 1994

[R19] DAfStb-Heft 526 Erläuterungen zu den Normen DIN EN 206-1, DIN 1045-2, DIN 1045-3, DIN 1045-4 und DIN EN 12620, Ausgabe 2011-12

[R20] FGSV, TP Gestein-StB, Technische Prüfvorschriften für Gesteinskörnungen im Straßenbau, Stand Mai 2020

[R21] Anforderungen an den Einsatz von mineralischen Stoffen aus Bautätigkeiten (Recycling-Baustoffe) im Straßen- und Erdbau Gem.RdErl. d. Ministeriums für Umwelt und Naturschutz, Landwirtschaft und Verbraucherschutz IV - 3 - 953-26308 - IV- 8 - 1573 - 30052 - u. d. Ministeriums für Wirtschaft und Mittelstand, Energie und Verkehr - VI A 3 - 32-40/45 - v. 9.10.2001

Recycling-Gesteinskörnung entsteht durch die Aufbereitung anorganischen Materials, das zuvor als Baustoff eingesetzt war.

Tabelle 2: Begriffe für die Anwendung der europäischen Gesteinskörnungsnormen

| Begriff | Erläuterung |
|---|---|
| Korngemisch | Gesteinskörnung, die aus einer Mischung grober Gesteinskörnungen und feiner Gesteinskörnungen besteht. |
| Füller (Ge\|steinsmehl) | Gesteinskörnung, deren überwiegender Teil durch das 0,063-mm-Sieb hindurchgeht und die Baustoffen zur Erreichung bestimmter Eigenschaften zugegeben werden kann |
| Korngruppe | Bezeichnung einer Gesteinskörnung mittels unterer (d) und oberer (D) Siebgröße, ausgedrückt als d/D |
| feine Gesteinskörnung | Bezeichnung für kleinere Korngruppen mit D nicht größer als 4 mm |
| grobe Gesteinskörnung | Bezeichnung für größere Korngruppen mit D nicht kleiner als 4 mm und d nicht kleiner als 2 mm |
| Los | Produktionsmenge, Liefermenge, Teilliefermenge (Eisenbahnwagen-, Lastwagen-, Schiffsladung) oder Lagerhalde, die innerhalb eines Zeitraumes unter der Annahme gleicher Bedingungen hergestellt wurde |
| Feinanteile | Anteil einer Gesteinskörnung, der durch das 0,063-mm-Sieb hindurchgeht |
| Kategorie | Niveau für die Eigenschaft einer Gesteinskörnung, ausgedrückt als Bandbreite von Werten oder als Grenzwert |
| Kornzusammensetzung | Korngrößenverteilung, ausgedrückt durch die Siebdurchgänge als Massenanteil in Prozent durch eine festgelegte Anzahl von Sieben |

Normung

Eine Gesteinskörnung für Beton mit einer Kornrohdichte > 2000 kg/m3 ist in DIN EN 12620 [3] genormt, Gesteinskörnung für Mörtel in DIN EN 13139 [4]. Leichte Gesteinskörnung für Beton, Mörtel und Einpressmörtel mit einer Kornrohdichte $\leq$ 2000 kg/m3 enthält DIN EN 13055-1 [2].

Die europäischen Produktnormen benennen die Prüfverfahren, die für das jeweilige Produkt anwendbar sind. Sie erfassen nicht die Anwendung in den verschiedenen Einsatzgebieten. Da Gesteinskörnungen für mehrere Anwendungen geeignet sind, gibt es zu einigen europäischen Produktnormen verschiedene nationale Anwendungsnormen. Einen Überblick über die verschiedenen europäischen Produktnormen für Gesteinskörnung und die deutschen nationalen Anwendungsdokumente ist aus Tabelle 3 zu entnehmen.

Tabelle 3: Überblick über die europ. Produktnormen für Gesteinskörnungen

| Europäische Norm | Nationales Anwendungsdokument |
|---|---|
| EN 12620 Gesteinskörnungen für Beton [3] | DIN 1045-2 [6] Tragwerke aus Beton. Stahlbeton und Spannbeton - Teil 2: Beton - Festlegungen, Eigenschaften. Herstellung und Konformität; Anwendungsregeln zu DIN EN 206-1 ; Änderung A3 |
| EN 13043 Gesteinskörnungen für Asphalte und Oberflächenbehandlungen für Straßen, Flugplätze und andere Verkehrsflächen | TL Gestein-StB 2004 Technische Lieferbedingungen für Gesteinskörnungen im Straßenbau |
| EN 13055-1 Leichte Gesteinskörnungen - Teil 1: Gesteinskörnungen für Beton, Mörtel und Einpressmörtel [2] | DIN 1045-2 [6] Tragwerke aus Beton. Stahlbeton und Spannbeton - Teil 2: Beton - Festlegungen, Eigenschaften, Herstellung und Konformität; Anwendungsregeln zu DIN EN 206-1; Änderung A3 |
| EN 13055-2 Leichte Gesteinskörnungen - Teil 2: Leichte Gesteinskörnungen für ungebundene und gebundene Anwendungen [7] | |
| EN 13139 Gesteinskörnungen für Mörtel [4] | wird in einzelnen Normen geregelt (z. B. DIN 185501, -2 [8, 9]) |
| EN 13242 Gesteinskörnungen für ungebundene und hydraulisch gebundene Gemische für Ingenieur- und Straßenbau | TL Gestein-StB, Ausg. 2004, Fassung 2018 Technische Lieferbedingungen für Gesteinskörnungen im Straßenbau [10] |

(fortgesetzt)

| Europäische Norm | Nationales Anwendungsdokument |
|---|---|
| EN 13383-1 Wasserbausteine - Teil 1: Spezifikation | |
| EN 13450 Gesteinskörnungen für Gleisschotter | |

Zwischen den Eigenschaften von Gesteinskörnungen bestehen vielfältige Wechselbeziehungen. Die Eigenschaften hängen wesentlich ab vom Ausgangsgestein (z.B. von der petrografischen Zusammensetzung des Kieses). Des Weiteren werden sie durch Verfahrensschritte bei der Aufbereitung (Wahl des Brechers bzw. der Brechereinstellung, Siebmaschine) beeinflusst. Daher sind die erfindungsgemäß eingesetzten Brecherwerkzeuge, mit denen die neuartigen Gesteinskörnungen aus Bauschutt hergestellt werden wichtig für den erzielten Erfolg.

An Gesteinskörnungen für das Bauwesen werden einige grundlegende Anforderungen gestellt, deren Erfüllung für den Einsatz unabdingbar ist. So darf Gesteinskörnung unter der Einwirkung von Wasser nicht erweichen, sich nicht zersetzen, mit den anderen Bestandteilen des Baustoffgemisches keine schädlichen Verbindungen eingehen und bei Beton den Korrosionsschutz der Bewehrung nicht beeinträchtigen.

Die Anforderungen an die Eigenschaften von Gesteinskörnung hängen von der vorgesehenen Art der Verwendung und der Herkunft der Gesteinskörnung ab. Es wird unterschieden zwischen

- geometrischen,

- physikalischen und

- chemischen

Anforderungen.

Die europäischen Produktnormen enthalten zum Teil für einzelne Prüfmerkmale und Kategorien zum Beschreiben der Gesteinskörnungen. Unter einer Kategorie versteht man das Niveau einer Eigenschaft (Prüfmerkmals) einer Gesteinskörnung, die als Bandbreite von Werten oder als Grenzwert ausgedrückt wird (Tabelle 4). So existieren für die Kornform die Kategorien $SI_{15}$, $SI_{20}$, $SI_{40}$, $SI_{55}$, $SI_{angegeben}$ und $SI_{NR}$.

Für das Prüfmerkmal SI (shape index) bedeutet das, dass der Anteil an nicht kubischen Körnern in der Gesteinskörnung ≤15 M.-%, ≤20 M.-%, ≤40 M.-% oder ≤55 M.-% liegen kann bzw. liegt dieser Anteil > 55 M.-% so ist der tatsächlich ermittelte Wert von z.B. 60 als SI60 anzugeben. Wird die Kategorie $SI_{NR}$ (NR = No Requirement) gewählt, so ist diese Eigenschaft ohne Belang, eine Prüfung braucht nicht durchgeführt werden.

| Tabelle 4: Kategorie | Bedeutung | Prüfung |
|---|---|---|
| $X_{XX}$ | Eigenschaft gefordert, Grenzwert festgelegt (Zahlenwert) | ja |
| $X_{angegeben}$ | Eigenschaft gefordert, kein Grenzwert festgelegt | ja |
| $X_{NR}$ | Eigenschaft nicht gefordert | nein |

Geometrische Anforderungen

Korngruppen

Alle Gesteinskörnungen sind durch Angabe der Korngruppe unter Verwendung zweier Siebgrößen mit der Bezeichnung d/D zu beschreiben; eine Ausnahme bilden Füller (Gesteinsmehl). Die Bezeichnung muss sich aus den Werten des Grundsiebsatzes, des Grundsiebsatzes plus Ergänzungssiebsatz 1 oder des Grundsiebsatzes plus Ergänzungssiebsatz 2 zusammensetzen (Tabelle 5). Eine Kombination der Siebgrößen von Ergänzungssiebsatz 1 und Ergänzungssiebsatz 2 ist nicht zulässig.

Das Verhältnis D/d der Korngruppen darf nicht kleiner als 1,4 sein.

Es werden folgende Korngruppen unterschieden:

- grobe Gesteinskörnung, z.B. 4/8, 8/16, **8/22,** 16/32

- feine Gesteinskörnung, z.B. 0/1, 0/2, 0/4

- Korngemisch, z.B. **0/8,** 0/16, 0/32

- Füller (Gesteinsmehl), (D ≤ 0,063 mm)

Erfindungsgemäß wird ein RC-Beton mit einer RC-Gesteinskörnung aus einer groben Gesteinskörnung bevorzugt 8/22 mit einem Korngemisch bevorzugt 0/8 vermischt, wobei beide Gesteinskörnungen bevorzugt zu 100% aus RC-Gesteinskörnungen bestehen. Damit wird in unerwarteter Weise ein neues Gesteinskörnungsgemisch geschaffen, das zur Herstellung von RC-Beton in überragender Weise geeignet ist.

Aus der nachfolgenden Tabelle 5 sind die Siebgrößen zur Bezeichnung der Korngrößen zu entnehmen.

## Tabelle 5: Siebgrößen zur Bezeichnung von Korngrößen

| Grundsiebsatz mm | Grundsiebsatz plus Ergänzungssiebsatz 1 mm | Grundsiebsatz plus Ergänzungssiebsatz 2 mm |
|---|---|---|
| 0 | 0 | 0 |
| 0,25 | 0,25 | 0,25 |
| 0,5 | 0,5 | 0,5 |
| 1 | 1 | 1 |
| 2 | 2 | 2 |
| - | 2,8 (3) | 3,15 (3) |
| 4 | 4 | 4 |
| - | 5,6 (5) | - |
| - | - | 6,3 (6) |
| 8 | 8 | 8 |
| - | - | 10 |
| - | 11,2 (11) | - |
| - | - | 12,5 (12) |
| - | - | 14 |
| 16 | 16 | 16 |
| - | - | 20 |
| - | 22,4 (22) | - |
| 31,5 (32) | 31,5 (32) | 31,5 (32) |
| - | - | 40 |
| - | 45 | - |
| 63 | 63 | 63 |
| ANMERKUNG 1 | Die in Klammern gesetzten gerundeten Größen können zur vereinfachten Beschreibung der Korngruppen herangezogen werden. | |
| ANMERKUNG 2 | Die orange gedruckten Werte gelten nur für DIN EN 13055-1 [7]. | |

Erfindungsgemäß war ein definiertes und geeignetes **Korngemisch** aus RC-Gesteinskörnungen zur Herstellung von RC-Beton nicht bekannt, sodass erst durch dosiertes Mischen von groben und feinen Gesteinskörnungen gemäß den nachfolgend angegebenen Parametern und unter Umständen unter Zugabe von Füller ein Korngemisch herzustellen war, das im Rahmen der Eignungsprüfung eine für den vorgesehenen Anwendungszweck geeignete betontechnologische Sieblinie ergab, die nunmehr erfindungsgemäß für die Herstellung von Korngemischen zur Herstellung von RC-Beton verwendet werden konnte.

**Kornzusammensetzung**

Die Kornzusammensetzung einer Gesteinskörnung wird durch Sieben und Wägen der im Siebversuch getrennten Korngruppen bestimmt. Dazu werden

- die Maschensiebe 0,063, 0,125, 0,25, 0,50, 1,0 und 2 mm und

- die Quadratlochsiebe 4, 8, 11,2 (11), 16, 22,4 (22), 31,5 (32), 45 und 62,5 (63) mm benutzt und die Rückstände auf diesen Sieben gewogen.

Die ausschließliche Festlegung des unteren **(d: Unterkorn)** und des oberen Siebes **(D: Überkorn)** reicht nicht aus, um eine Gesteinskörnung für den Einsatz im Beton zu charakterisieren. Grobe Gesteinskörnungen müssen daher mit den auf ihre Größenbezeichnung d/D und die gewählten Kategorien zutreffenden allgemeinen Anforderungen an die Kornzusammensetzung nach Tabelle 6 übereinstimmen.

Tabelle 6: Allgemeine Anforderungen an die Kornzusammensetzung

| Gesteinskörnung | Korngröße | Durchgang in M.-% | | | | | Kategorie $G^d$ |
|---|---|---|---|---|---|---|---|
| | | | Überkorn | | Überkorn | | |
| | | 2D | $1,4\ D^{a,b}$ | $D^c$ | $D^b$ | $d/2^{a,b}$ | |
| Grob | $D/d \leq 2$ oder $D \leq 11,2$ mm | 100 100 | 98 bis 100 98 bis 100 | 85 bis 99 80 bis 99 | 0 bis 20 | 0 bis 5 | $\mathbf{G_C85/20}$ $G_C80/20$ |
| | $D/d > 2$ und $D > 11,2$ mm | 100 | 95 bis 100 | 90 bis 99 | 0 bis 15 | 0 bis 5 | $G_C90/15$ |
| Fein | $D \leq 4$ mm und $d = 0$ | 100 | 95 bis 100 | 85 bis 99 | | | $G_F85$ |
| Natürlich zusammengeset zte Gesteinskörnun g 0/8 | D=8mm undd=0 | 100 | 98 bis 100 | 90 bis 99 | | | $G_{NG}90$ |
| Korngemisch | $D \leq 45$ und d=0 | 100 100 | 98 bis 100 98 bis 100 | 90 bis 99 85 bis 99 | | | $G_A90$ $G_A85$ |

$^a$ Wenn die errechneten Siebgrößen nicht mit der ISO-565:1990-R20-Reihe übereinstimmen, ist stattdessen das nächstliegende Sieb der Reihe heranzuziehen.

$^b$ Für Beton mit Ausfallkörnung oder andere spezielle Verwendungszwecke können zusätzliche Anforderungen vereinbart werden

vereinbart werden. $^c$ Der Siebdurchgang durch D darf unter Umständen auch mehr als 99 % Massenanteil betragen; in diesen Fällen muss der Hersteller die typische Korazusammensetzung aufzeichnen und angeben, wobei die Siebgrößen D, d, d< 2 und die zwischen d und D liegenden Siebe des Grundsiebsatzes plus Ergänzungssiebsatz 1 oder des Grundsiebsatzes plus Ergänzungssiebsatz 2 enthalten sein müssen. Siebe, die nicht mindestens 1,4-mal größer sind als das nächst kleinere Sieb. können davon ausgenommen werden

$^d$ Weitere Produktnormen für Gesteinskörnungen umfassen andere Anforderungen an die Kategorien.

Wird der Anteil der einzelnen Korngruppen am Gesamtsiebgut über den Siebweiten aufgetragen, erhält man die Sieblinie. Für die Siebrückstände fällt diese mit steigender Siebweite von 100 % auf 0 %. Da jedoch eine steigende Sieblinie die Korngruppenanteile von 0 mm bis zum jeweiligen Sieb direkt angibt und daher übersichtlicher und verständlicher ist, wird der Siebdurchgang (= 100 % - Siebrückstand) errechnet und daraus die Sieblinie als grafische Darstellung der Kornzusammensetzung gezeichnet.

Für die Betontechnologie ist im Grunde nur die Kenntnis der volumenmäßigen Zusammensetzung von Interesse, weil diese die zu umhüllende Oberfläche und die Packungsdichte bestimmt, von denen der Zementleimgehalt und die von ihm abhängigen Eigenschaften beeinflusst werden. Für die praktische Handhabung ist die massenmäßig durchgeführte Ermittlung der Sieblinie einfacher. Bei der Umsetzung muss man sich darüber im Klaren sein, dass mit der Festlegung der gravimetrischen Sieblinienbereiche stets eine volumenmäßige Vorstellung verbunden ist (Bild 2). Für normale Gesteinskörnungen stimmen gravimetrische und volumetrische Kurve häufig überein. Deutliche Unterschiede treten durch unterschiedliche Kornrohdichten der einzelnen Korngruppen auf. Dies ist insbesondere bei leichten Gesteinskörnungen und rezyklierten Gesteinskörnungen der Fall. Dies muss bei der Umrechnung in die volumetrische Kornverteilung in jedem Fall beachtet werden.

Diagramm Bild 2:

### Grobe Gesteinskörnungen

Grobe Gesteinskörnungen werden unterschieden in eng gestuft und weit gestuft. Bei eng gestuften groben Gesteinskörnungen gibt es lediglich Anforderungen an den zulässigen Über- und Unterkornanteil, während bei weit gestuften groben Gesteinskörnungen auch noch Anforderungen an den Siebdurchgang eines zwischen den Begrenzungssieben liegenden "Mittleren Siebes" gestellt werden.

Eng gestufte grobe Gesteinskörnungen sind z. B. die häufig verwendeten Korngruppen 2/8; 8/16, **8/22** und 16/32. Bezüglich der Regelanforderung darf die Korngröße des Überkorns nicht mehr beliebig groß sein, sondern muss zu 98 % durch das nächst größere Prüfsieb (1,4facher Durchmesser des Nenngrößtkorns) hindurchgehen. Analog gilt dies auch für die Korngröße des Unterkorns: Es darf nicht beliebig klein sein, sondern muss zu 95 % auf dem Sieb der Siebweite d/2 liegen bleiben.

Erfindungsgemäß wird für die Herstellung des RC-Betons die grobe Gesteinskörnung 8/22 in Alleinstellung oder in Kombination mit der feineren Gesteinskörnung 8/22 bevorzugt.

Nach den DIN 1045-2, Anhang U gilt für Beton als Regelanforderung an die Kornzusammensetzung von groben Gesteinskörnungen die Kategorie GC85/20. Das bedeutet, dass der Anteil an Unterkorn max. 20 M.-% und der an Überkorn max. 20 M.-% betragen darf. Zudem ist festgelegt, dass mindestens 1 M.-% Überkorn in der Korngruppe enthalten sein muss. Damit soll sichergestellt werden, dass z.B. in einer Lieferkörnung 16/32 der gesamte Kornbereich von 16 bis 32 mm enthalten ist. Diese Regelung gilt auch für feine Gesteinskörnungen und Korngemische.

**Korngemische** sind Gemische aus feinen und groben Gesteinskörnungen, d ist bei Korngemischen also stets Null. Die Sieblinien für die verschiedenen definierten Korngemische müssen in einem bestimmten Bereich liegen, der etwa dem Sieblinienbereich 3 (grob- bis mittelkörnig) entspricht (vgl. Bild 2). Für ein Korngemisch 0/32 ist dies beispielhaft im Bild 2 dargestellt. Zu jedem Korngemisch sind in DIN EN 12620 zwei Zwischensiebe (bei dem Korngemisch 0/32 sind dies die Siebe 4 mm und 16 mm) angegeben, für die ein bestimmter Siebdurchgang mit den vorgegebenen Grenzabweichungen (20 M.-%) einzuhalten ist. Die Anforderungen sind so festgelegt, dass sich im Ergebnis Sieblinien einstellen, die zwischen den Sieblinien A und B liegen (vgl. Bild 2).

Erfindungsgemäß wird dabei das Korngemisch RC 0/8 bevorzugt.

Feine Gesteinskörnungen müssen die auf die obere Siebgröße D bezogenen allgemeinen Anforderungen an die Kornzusammensetzung nach Tabelle 7 erfüllen. Es gibt keine "Absolut-Anforderungen" an die Kornzusammensetzung. Der Hersteller muss angeben, welche Sieblinie seine feine Gesteinskörnung im Mittel aufweist und diese "Typische Kornzusammensetzung" dann mit vorgegebenen Grenzabweichungen einhalten. Zusätzlich gelten feste Anforderungen an den Feinanteilgehalt ≤ 0,063 mm und den erlaubten Überkornanteil.

### Betontechnologische Sieblinien

Die Betontechnologie fordert zur Herstellung von Beton mit möglichst vollständiger Verdichtung vom Kornaufbau eines Korngemisches die Erfüllung zweier Aufgaben:

- Der Kornaufbau soll ein dichtes Korngerüst ergeben, damit der Zementleimgehalt zum Umhüllen der Körner und zum Ausfüllen der Zwischenräume gering ist. Eine Vergrößerung der Packungsdichte kann durch Zusatz von Feinstsand erreicht werden, der jedoch wegen der damit verbundenen Oberflächenvergrößerung bei gleichem Zementleimgehalt zu geringerer Verdichtbarkeit führt. Eine diese Wirkung ausgleichende Zementleimvermehrung hebt dagegen die Vorteile des größeren Dichtigkeitsgrades wieder auf.

- Die Oberfläche soll möglichst klein, die Gesteinskörnung also möglichst grob sein, um die zur Umhüllung benötigte Zementleimmenge gering halten zu können.

Das Optimum liegt zwischen diesen Extremwerten, d.h., dass die Gesteinskörnungsoberfläche und gleichzeitig der Haufwerksporenraum möglichst klein sein sollen. Die günstigsten Bedingungen werden durch zahlreiche "Idealsieblinien" angegeben, die sowohl stetig als auch unstetig sein können.

Eine bestimmte Verarbeitbarkeit des Betons erfordert einen bestimmten Zementleimbedarf, der sich wiederum aus spezifischer Oberfläche und Packungsdichte der Gesteinskörnung ergibt. Da die spezifische Oberfläche der Gesteinskörnung nur mit beträchtlichem Aufwand zu messen ist, verwendet man in der Betontechnologie aus der Kornzusammensetzung abgeleitete Kenngrößen. Mit ihnen lassen sich Korngemische beurteilen, die von einer vorgeschriebenen Sieblinie abweichen, da Kornzusammensetzungen mit gleichen Kennwerten betontechnologisch gleichwertig sind.

Die gebräuchlichen Gesteinskörnungskennwerte sind in den nachfolgenden Abschnitten zusammengestellt. In DIN 1045-2 sind die für Stahlbeton üblichen Sieblinien angegeben. Die Auswertung eines Siebversuches ist in Tabelle 7 gezeigt.

Tabelle 7: Auswertung eines Siebversuchs

| Maschenweite | 2 | 4 | 8 | Summe |
|---|---|---|---|---|
| Durchgang [M.-%] | 40 | 70 | 100 | |
| Korngruppe | 0/2 | 2/4 | 4/8 | |
| Anteil [M.-%] | 40 | 30 | 30 | |
| $\rho_{Rg}$ [kg/m$^3$] | 2600 | 1400 | 900 | |
| $\text{Volumenanteil} = \dfrac{M}{\rho_G}\ [\text{m}^3]$ | 0,0154 | 0.0214 | 0,0333 | 0,0701 ≙ 100 % |

(fortgesetzt)

| Maschenweite | 2 | 4 | 8 | Summe |
|---|---|---|---|---|
| Durchgang Vol. [m$^3$] | 0,0154 | 0.0365 | 0,0701 | |
| Durchgang [Vol. -%] | 22 | 52 | 100 | |

**Feuchtigkeit und Wasseraufnahme**

Wasser kann bei Gesteinskörnungen als Oberflächenfeuchte vorliegen und/oder als Kernwasser vorhanden sein. Die Wasseraufnahme des Kerns spielt bei den meisten normalen Gesteinskörnungen keine Rolle, ist jedoch bei porösem Material wie leichter Gesteinskörnung und Recycling-Gesteinskörnung von Bedeutung.

Die Oberflächenfeuchte muss bekannt sein, da dieses Wasser unmittelbar bei der Herstellung von Beton verfügbar ist und für das Einstellen eines konstanten Wasserzementwerts berücksichtigt werden muss. Die Feuchtigkeit ändert sich mit dem Transport und mit den Lagerungs- und Klimabedingungen. Sand kann wegen seiner großen Oberfläche mehr Feuchtigkeit als gröbere Korngruppen halten und wird daher meist mit mehr als 5 M.-% Wassergehalt angeliefert.

Leichte Gesteinskörnung und Recycling-Gesteinskörnung sind aufgrund ihrer Porosität in der Lage, Wasser im Inneren aufzunehmen. Die Geschwindigkeit dieser Wasseraufnahme hängt von der Porenstruktur der Gesteinskörnung, dem bereits vorhandenen Wassergehalt und der vorhandenen Feuchtigkeitsverteilung ab. Die Wasseraufnahme erfolgt zum größten Teil innerhalb der ersten 60 Minuten. Die weitere Wasseraufnahme ist so gering, dass sie normalerweise für die Herstellung von Beton nicht berücksichtigt werden muss. Bei der Herstellung von Beton muss die Wasseraufnahme berücksichtigt werden, damit der Wasserzementwert in ausreichend engen Grenzen eingehalten wird. Das Anmachwasser muss um die Wasseraufnahme innerhalb der ersten 60 Minuten erhöht werden. Der resultierende Wasserzementwert ist dadurch größer als der "wirksame" Wasserzementwert.

Leichte Brechsande (z. B. aus Bims, Blähschiefer oder Blähton) können eine Wasseraufnahme von über 35 M.-% haben. Die Wasseraufnahme dieser Sande kann nach DIN V 18004 [19] mit dem "BVK-Verfahren" bestimmt werden. Für die Berechnung des "wirksamen" Wasserzementwerts sollte nur 70 % dieser Wasseraufnahme in Ansatz gebracht werden, da die Leichtsande in der Praxis aus dem Bindemittelleim weniger Wasser aufsaugen können, als in der Prüfung ermittelt wurde.

**Beschreibung einer bevorzugten Ausführungsform**

Eine bevorzugte Ausführung definiert den in der nachfolgenden Tabelle aufgeführten ressourcenschonenden Baustoff, insbesondere zur Herstellung von tragenden und nicht tragenden Innenwandelementen.

Tabelle 8: Bevorzugte Ausführung nach der Erfindung für einen RC-Beton des Typs 3:

| Ausgangsstoffe | |
|---|---|
| **Rezyklierte Gesteinskörnung** | |
| Aufbereitung | gebrochen, fraktioniert, |
| Stoffliche Zusammensetzung nach DIN 4226-101 | **Typ 3** |
| • Anteil $R$b | ≤ 50 % |
| • Anteil $R$a | ≤ 5 % |
| • Anteil $X + R$g | ≤ 1 % |
| Sieblinie (Prüfung nach DIN EN 933-1 [R6]) | |
| • Größtkorn | ≤ 22 mm |
| • Sieblinienbereich gemäß DAfStb-Heft 400 [R18], | 3 |
| • Zusammensetzung | mindestens 2 Korngruppen |
| Wasseraufnahme | |
| • DAfStb-Richtlinie [R17], Anhang B nach 10min | ≤ 6,0 % |

(fortgesetzt)

| Ausgangsstoffe | |
|---|---|
| **Rezyklierte Gesteinskörnung** | |
| • DIN EN 1097-6 [R10], nach 24 Stunden | ≤ 8,0 % |
| Rohdichte nach DIN EN 1097-1 [R10] | ≥ 2.000 kg/m3 |
| | |
| **Zement** | |
| Zementart nach DIN EN 197-1 [R3] | CEM I oder CEM II/A-s |
| Zementfestigkeitsklasse | 52,5 |
| Zementgehalt | 360 kg/m 3 |
| | |
| **Zugabewasser** | |
| nach DIN EN 1008 [R9] | gefiltertes Brunnenwasser, Grundwasserentnahme |
| | |
| **Zusatzmittel** | |
| nach DIN EN 934-2 [R8] | Fließmittel (FM) |

Fortsetzung Tabelle 8:

**Tabelle 9:** Datenblatt der Zusammensetzung und Eigenschaften eines Innenwandelementes aus RC-Beton gemäß der Erfindung.

| Frisch- und Festbaustoffeigenschaften / | |
|---|---|
| Wasserzementwert w/z | ≤ 0,50 |
| Konsistenzbereich, geprüft nach DIN EN 12350-5 | F3, 420 bis 550 mm |
| Baustoffdruckfestigkeit 28 d, geprüft nach DIN EN | ≥ C20/25 |
| Frostwiderstand, geprüft nach DIN CEN/TS 12390-9 [R16] | < 1.000 g/m3 |
| Elastizitätsmodul (Abminderung zu Normalbeton) | - 45 % |
| Endkriechzahl für Bemessung (Faktor zu Normalbeton) | · 1,5 |
| Schwinddehnung | □cd(t) = □ds(t, ts) · kh ·□cd, 0 |
| | |
| **Bauteil** | |
| Bauteilfunktion | Nichttragende und tragende Innen- wände |
| Herstellung | Betonfertigteilwerk |
| Wandstärke | ≥ 0,10 m |
| Wandhöhe | ≤ 3,70 m |

(fortgesetzt)

| Bauteil | |
|---|---|
| Wandlänge | ≤ 11,00 m |
| Bewehrung | Konstruktionsbewehrung, keine bemessungstechnisch angesetzte Bewehrung |
| | |

Ein bevorzugtes Ablaufschema bei der Herstellung von Innenwandelementen aus RC-Beton ist nachfolgend angegeben.

Ablaufschema bei der Herstellung von Innenwandelementen

**Tabelle 9:** Ablaufschema

| | |
|---|---|
| 1. | Annahme und Aufbereitung der rezyklierten Materialien |
| 2. | Bauschuttaufnahme |
| 3. | Klassifizierung für den Einsatz in Büscher-Wänden |
| 4. | Aufbereitung |
| 5. | Einlagerung |
| 6. | Rohstoffprüfungen der rezyklierten Gesteinskörnung |
| 7. | Freigabe für den Einsatz in der Produktion |
| 8. | Ablauf der Herstellung des Baustoffs |
| 9. | Vorhalten/Lagern der Rohstoffe |
| 10. | Dosierung der Rohstoffe |
| 11. | Mischen der Rohstoffe |
| 12. | Transport zur Form |
| 13. | Ablauf Herstellung, Lagerung und Verladung des Produktes Büscher-Wand |
| 14. | Herstellung der Bauteilschalung |
| 15. | Einbau erforderlicher Bewehrung, Einbauteile, Transportanker, etc. |
| 16. | Füllen der Bauteilschalung mit Baustoff |
| 17. | Verdichten des Baustoffs |
| 18. | Oberflächenbearbeitung an der Einfüllfläche (Glätten etc.) |
| 19. | Aushärtung und Nachbehandlung |
| 20. | Entschalen des Bauteils |
| 21. | Nachbearbeitungen des Bauteils |
| 22. | Kennzeichnung des Bauteils |
| 23. | Einlagerung des Bauteils |
| 24. | Verladung und Transport des Bauteils |
| 25. | Baustoffproben, Prüfungen während des Herstellprozesses |
| 26. | Ausscheidung von fehlerhaften Bauteilen |

Die zur Herstellung der Innenwandelemente abschließend erarbeitete erfindungsgemäße Baustoffzusammensetzung ist in der nachfolgenden Tabelle 10 angegeben.

**Tabelle 10:** Baustoffzusammensetzung

| Baustoff | | Stoffraum [dm³/m³] | Masse trocken [kg/m³] | Masse feucht [kg/m³] | Oberflächenfeuchte [%] | Wasser [kg/m³] |
|---|---|---|---|---|---|---|
| Zement | CEM II/A-S 52,5 R | 116,1 | 360 | 360 | | |

(fortgesetzt)

| Baustoff | | Stoffraum [dm³/m³] | Masse trocken [kg/m³] | Masse feucht [kg/m³] | Oberflächenfeuchte [%] | Wasser [kg/m³] |
|---|---|---|---|---|---|---|
| Zugabewasser | | 176,0 | 176 | 52 | | 52 |
| Zusatzmittel | MasterEase 5020 | 2,69 | 2,88 | 2,88 | | |
| Gesteinskörnung | **RC 0/8** | 303,8 | 742 | 831 | 12,0 | 89 |
| | **RC 8/22** | 371,4 | 868 | 903 | 4,0 | 35 |
| Luftporen | | 30,0 | | | | |
| Summe | | 1.000 | 2.149 | 2.149 | | 176 |

Die Oberflächenfeuchte wird für die Gesteinskörnung **RC 0/8** mittels Sonde bestimmt, der Gesamtwassergehalt über Trocknung bei 105 °C bis zur Massekonstanz. Aus der Differenz wird die Kernfeuchte rechnerisch ermittelt. Für die Gesteinskörnung **RC 8/22** wird die Oberflächenfeuchte nach DIN EN 1097-6 [R10] bestimmt, der Gesamtwassergehalt wie bei der Gesteinskörnung RC 0/8 über Trocknung bei 105 °C bis zur Massekonstanz. Die gemittelten Ergebnisse der Prüfungen werden aufgerundet und für die Ermittlung des in Abzug zu bringenden Wasseranteils, der über die rezyklierte Gesteinskörnung in die Baustoffzusammensetzung maximal eingebracht werden kann, dem tatsächlichen Zugabewasser in Abzug gebracht.

Durch die gewählte Vorgehensweise wird zum einen sichergestellt, dass ein maximaler Wasseranteil der rezyklierten Gesteinskörnung, der sich aus der Oberflächenfeuchte ergibt und den Wasserzementwert verändern könnte, dem Zugabewasser bei der Herstellung abgezogen wird. Zum anderen wird darüber hinaus als weitere Sicherungsmaßnahme, dass der Zielwert des Wasserzementwertes von 0,50 nicht überschritten wird, der Wasserzementwert bei der Herstellung auf 0,49 reduziert und die Zielkonsistenz final über Fließmittelzugabe eingestellt.

Da der Anmelder davon ausgeht, dass sich in Zukunft der Anteil an Kalksandstein und Mauerziegel im Abbruchmaterial erhöhen wird, wurden die Versuche gezielt mit einem erhöhten Anteil an diesen Materialien (worst case scenario) durchgeführt. Die Gesteinskörnung wurde in ofentrockenem Zustand eingesetzt. Das Wassersaugen wurde über Zugabewasser ausgeglichen, wobei sich die Zugabewassermenge nach der Wasseraufnahme nach 10 Minuten richtete. Der Wasseranteil des Fließmittels wurde in der Zugabewassermenge berücksichtigt. Die Sieblinie setzte sich aus dem neuartigen Mischgranulat RC 0/8 und RC 8/22 sowie weiteren Bestandteilen der Rb-Fraktion zusammen. Die Zusammenstellung der Sieblinie mit rezyklierten Gesteinskörnungen erfolgte unter Berücksichtigung der in Tabelle 4 dargestellten Zielzusammensetzung für die Betonzusammensetzungen RC-4.3 und RC-5 sowie der angestrebten Korngrößenverteilung (Sieblinie 0/22).

Die Betonzusammensetzung RB-6 (siehe Tabelle 11) wurde in den Untersuchungen als Referenzbeton verwendet und wies bei gleichem Wasserzementwert mit einem Zementgehalt von 300 kg/m3 einen deutlich geringeren Zementgehalt gegenüber den erfindungsgemäßen Baustoffzusammensetzungen RC-4.3 und RC-5 mit jeweils 360 kg/m3 auf.

Tabelle 11: Baustoffzusammensetzungen ergänzt durch die Volumina

| Baustoff | | RC-4.3 | | RC-5 | | RB-6 | |
|---|---|---|---|---|---|---|---|
| | | [dm³/m³] | [kg/m³] | [dm³/m³] | [kg/m³] | [dm³/m³] | [kg/m³] |
| Zement | CEM II/A-S 52,5 R | 118,0 | 360 | 118,0 | 360 | 118,0 | 300 |
| Wasser | | 180,0 | 180 | 180,0 | 180 | 180,0 | 180 |
| Zugabewasser | Max. 4,5% Wasseraufnahme | | + 160,4 | | + 129,7 | | |
| Zusatzmittel | MasterEase 5020 | 6,4 | 6,8 | ≤ 1 | ≤ 3 | | |

(fortgesetzt)

| Baustoff | | RC-4.3 | | RC-5 | | RB-6 | |
|---|---|---|---|---|---|---|---|
| | | [dm³/m³] | [kg/m³] | [dm³/m³] | [kg/m³] | [dm³/m³] | [kg/m³] |
| Gesteinskörnung | Sand 0/2 | | | | | | 299,3 |
| | Kies 2/8 | | | | | | 246,1 |
| | Kies 8/16 | | | | | | 1214,0 |
| | **RC 0/8** | 141,7 | 307,4 | 135,0 | 293,0 | | |
| | **RC 8/22** | 191,8 | 443,0 | 182,8 | 422,3 | | |
| | Gitterziegel 0/8 | 73,8 | 145,3 | | | | |
| | Gitterziegel 8/22 | 190,2 | 378,5 | | | | |
| | Dachziegel 0/8 | 15,1 | 26,2 | 117,9 | 205,2 | | |
| | Dachziegel 8/22 | 23,5 | 45,6 | 188,1 | 365,0 | | |
| | Kalksandstein 0/8 | 8,9 | 17,7 | 8,5 | 16,87 | | |
| | Kalksandstein 8/22 | 18,1 | 36,2 | 17,3 | 34,5 | | |
| | Asphaltbruch | 22,2 | 54,3 | 21,1 | 51,8 | | |
| Luftporen | | 10,0 | | 10,0 | | 10 | |

| Bestandteil | Größe | Scheinbare Rohdichte $\rho_a$ [g/cm³] | Rohdichte $\rho_{rd}$ [g/cm³] | Rohdichte $\rho_{ssd}$ [g/cm³] | 10 min. Wasser-aufnahme [1] [M.-%] RC- 5 | 10 min. Wasser-aufnahme [M.-%] RC- 4.3 | 24 h Wasser-aufnahme [1] [M.-%] | Kornfeuchte (Lieferung) [M.-%] |
|---|---|---|---|---|---|---|---|---|
| Gitter-Ziegel (GZ) | 0-8 mm | 2,26 | 1,74 | 1,97 | 13,3 | - (16,3) | 15,1 | 5,0 |
| | 8-22 mm | 2,27 | 1,77 | 1,99 | 12,5 | - (18,3) | 14 | 7,1 |
| Kalksandstein (KSS) | 0-8 mm | 2,37 | 1,72 | 1,99 | 16,1 | - (18,3) | 17,4 | 2,1 |
| | 8-22 mm | 2,30 | 1,76 | 2,00 | 13,4 | - (14,1) | 14,6 | 1,1 |
| Dachziegel (DZ) | 0-8 mm | - | - | 1,74 | 15,3 | | 17,6 | 0,24 |
| | 8-22 mm | - | - | 1,94 | 9,7 | | 11,8 | 0,16 |
| Gemischte RC GK (Mischgranulat) | 0-8 mm | 2,36 | 2,03 | 2,17 | 6,8 | - (9,9) | 8,2 | 31 |
| | 8-22 mm | 2,44 | 2,22 | 2,31 | 4,1 | - (6,13) | 5,8 | 2,2 |
| Asphalt (Ra) | 0-22 mm | 2,45 | 2,45 | 2,45 | 0,0 | | 0,0 | 0,0 |

$\rho_{rd}$: Rohdichte auf ofentrockener Basis

$\rho_{ssd}$: Rohdichte auf wassergesättigter und oberflächentrockener Basis

[1] Zugehörige Messreihen Wasseraufnahme nach 10 Minuten und 24 h

**Tabelle 12**: Ergänzende Erläuterung zur Rohdichte und Wasseraufnahme der rezyklierten Gesteinskörnung (Mischgranulat, Gitterziegel, Dachziegel, Kalksandstein, Asphalt) nach 10 Minuten, 24 Stunden und zur Kornfeuchte im Lieferzustand

| | | Nachweis prozentuale Aufteilung | | | | |
|---|---|---|---|---|---|---|
| | | RC-100 | | | | |
| | | RC-4.3 | | | | |
| | | [M.-%] soll | [kg/m²] | | | [M.-%] ist |
| **Gesteinskörnung** | RC-0/8 | $R_c$ u $R_u$ 45 | 307,4 | 307,4+443,0=750,4 kg  750,4 kg /1454,2 kg = 51,6% | Im RC -0/8 neben $R_c$ u. $R_u$ enthalten: GZ: 0,111x307,4=34,12 kg KSS: 0,036x 307,4=11,07 kg Ra: 0,01432x307,4=4,40 kg Abzüglich Summe: 49,59 kg ~3,41 % | 45,1 % |
| | RC-8/22 | | 443,0 | | Im RC -8/22 neben $R_c$ u. $R_u$ enthalten: GZ: 0,0525x 443=23,26 kg KSS: 0,0175x 443=7,75 kg Ra: 0,0316x 443=14,0 kg Abzüglich Summe: 45,0 kg ~3,1 % | |
| | GZ 0/8 | 40 | 145,3 | 523,8 kg 36,0 % | 34,12 kg ~ 2,35 % | 39,95 % |
| | GZ 8/22 | | 378,5 | | 23,26 kg~ 1,60 % | |
| | DZ 0/8 | 5   Σ 50 % $R_b$ | 26,2 | 71,8 kg | … | 4,94 % |
| | DZ 8/22 | | 45,6 | | … | |
| | KSS 0/8 | 5 | 17,7 | 53,9 kg 3,71 % | 11,07 kg ~0,76 % | 5,00 % |
| | KSS 8/22 | | 36,2 | | 7,75 kg ~0,53 % | |
| | Ra | 5 $R_a$ | 54,3 | 54,3 kg 3,73% | 4,40 kg~0,30 % 14,0 kg~0,96 % | 4,99 % |
| | | | 1454,2 | | | 100% |

**Tabelle 13**: Ergänzende Erläuterung der RC-4.3 Baustoffzusammensetzung, Nachweis der prozentualen Aufteilung der rezyklierten Gesteinskörnung für RC-4.3.

| Stoffraumrechnung | | | |
|---|---|---|---|
| | Masse kg/m³ | Dichte kg/dm³ | Vol. dm³/m³ |
| Wasser | 180 | 1 | 180 |
| Zement | 360 | 3,05 | 118,0 |
| Poren | | | 10,5 |
| Fließmittel | 6,8 | 1,07 | 6,4 |
| Zusatzwasser-menge | 160,4 | | - |
| RC-0/8 | 307,4 | 2,17 | 141,66 |
| RC-8/22 | 443,0 | 2,31 | 191,77 |
| GZ 0/8 | 145,3 | 1,97 | 73,76 |
| GZ 8/22 | 378,5 | 1,99 | 190,20 |
| DZ 0/8 | 26,2 | 1,74 | 15,06 |
| DZ 8/22 | 45,6 | 1,94 | 23,51 |
| KSS 0/8 | 17,7 | 1,99 | 8,89 |
| KSS 8/22 | 36,2 | 2,00 | 18,10 |
| Ra | 54,3 | 2,45 | 22,16 |
| Gesteinskörnung | 1454,2 | | 685,11 |
| Ohne Zusatzwasser | 2001,0 | | |
| | | | |
| Mit Zusatzwasser | 2161,4 | | 1000 |
| | | | |

Tabelle 14: Ergänzende Erläuterung zur Stoffraumrechnung der RC-4.3 Baustoffzusammensetzung.

**Fazit 1:** Mit der erfindungsgemäß entwickelten Baustoffzusammensetzung RC-4.3, die Anteile von $Rb$ von 50 % und $Ra$ von 5 % enthalten, konnten die geforderten Zielgrößen an die Frisch- und Festbaustoffeigenschaften erreicht werden. Mit der Zusammensetzung einhergehende Veränderungen im Verformungsverhalten werden im Bemessungsansatz berücksichtig.

Aus der erfindungsgemäßen Baustoffzusammensetzung RC-4.3 wurde im Folgenden durch den Anmelder die weitere erfindungsgemäße Sortennummer 109 entwickelt.

Der wesentliche Unterschied liegt dabei in der Reduzierung des Wasserzementwertes von 0,50 (RC-4.3) auf 0,49 (109). Hieraus ergibt sich ein von 180 Liter auf 175 Liter reduzierter Zugabewassergehalt. Darüber hinaus wurde in der Mischungsberechnung ein Luftporenanteil von 3,0 Vol.-% anstelle von 1,0 Vol.-% berücksichtigt. Hiermit werden die in den Untersuchungen beobachteten höheren Luftporengehalte der Baustoffzusammensetzungen berücksichtigt. Die Oberflächenfeuchte wurde an das Prüfergebnis der Chargenprüfung angepasst.

**Tabelle 15:** Baustoffzusammensetzung Sortennummer 109

| Baustoff | | Stoffraum [dm³/m³] | Masse trocken [kg/m³] | Masse feucht [kg/m³] | Oberflächenfeuchte [%] | Wasser [kg/m³] |
|---|---|---|---|---|---|---|
| Zement | CEM II/A-S 52,5 R | 116,1 | 360 | 360 | | |
| Zugabewasser | | 175,0 | 175 | 116 | | 116 |
| Zusatzmittel | MasterEase 5020 | 2,69 | 2,88 | 2,88 | | |
| Gesteinskörnung | RC 0/8 | 304,3 | 757 | 795 | 5,0 | 38 |
| | RC 8/22 | 371,9 | 846 | 867 | 2,5 | 21 |
| Luftporen | | 30,0 | | | | |
| Summe | | 1.000 | 2.141 | 2.141 | | 175 |

**Fazit 2:** Aus einer Reduzierung des Wasserzementwertes von 0,50 (RC-4.3) auf 0,49 (109) können negativen Auswirkungen auf die Festbaustoffeigenschaften abgeleitet werden. Verschlechterungen in der Konsistenz können über das Zusatzmittel kompensiert werden.

Die erfindungsgemäße Baustoffzusammensetzung "109-neu" unterscheidet sich nur geringfügig von der alternativen Baustoffzusammensetzung "109". Die Zugabewassermenge liegt bei der Baustoffzusammensetzung "109-neu" um 1 Liter höher als bei Baustoffzusammensetzung "109". Dieser Unterschied kann vernachlässigt werden, da er im Bereich der Dosiergenauigkeit liegt. Geändert wurde jedoch die Vorgehensweise zur Ermittlung der Oberflächenfeuchte und deren Berücksichtigung bei der Berechnung der Zugabewassermenge.

**Fazit 3:** Die entwickelte Baustoffzusammensetzung, die der allgemeinen bauaufsichtlichen Zulassung zugrunde gelegt werden soll, ist mit der Sortennummer 109-neu in Tabelle 8 dokumentiert. Sie weist gegenüber den vorangegangenen Baustoffzusammensetzungen RC-4.3 und 109 ein zielführendes Konzept auf, um die Oberflächenfeuchte der rezyklierten Gesteinskörnungen so zu erfassen, dass diese keine negativen Auswirkungen auf den Wasserzementwert ausüben kann. Damit werden auch die zu erreichenden Festigkeitseigenschaften sichergestellt. Die Anforderungen an die Verarbeitbarkeit können über die Zusatzmittelzugabe gesteuert werden.

**Zementart CEM I:** In den Untersuchungen wurden bisher ein Portlandkomposit-Zement CEM II/A-S 52,5 R eingesetzt. Die Erfindung soll ebenfalls die Verwendung eines Portlandzements CEM I ermöglichen. Beide Zementarten werden in DIN EN 197-1 [R3] geregelt. Sofern der Portlandzement CEM I mit der gleichen Zementfestigkeitsklasse 52,5 und den gleichen Anforderungen an die Anfangsfestigkeit (R) eingesetzt wird, ist von der gleichen Leistungsfähigkeit des Zementes auszugehen.

**Fazit 4:** Bei Verwendung eines CEM I 52,5 R sind keine negativen Auswirkungen zu erwarten.

**Ergebnisse der Frischbaustoffeigenschaften**

Im Rahmen der Frischbaustoffeigenschaften wurden das Ausbreitmaß nach DIN EN 12350-5 [R11], die Frischbetonrohdichte nach DIN EN 12350-6 [R12], der Luftporengehalt nach DIN EN 12350-7 [R13] und die Frischbetontemperatur ermittelt. Die Ergebnisse sind in Tabelle 16 dokumentiert.

**Tabelle 16:** Ergebnisse der Frischbaustoffeigenschaften (aus [U15], S. 13)

| Mischung | Nr. | Ausbreitmaß nach 5 Minuten [mm] | Ausbreitmaß nach 30 Minuten [mm] | Frischrohdichte [kg/m³] | Luftporengehalt [%] | Frischtemperatur [°C] |
|---|---|---|---|---|---|---|
| RC-4.3 | 1 | 470 (F3) | - | 2.040 | 3,3 | 26,5 |
| | 2 | 520 (F4) | - | 2.030 | 2,8 | 25,0 |
| RC-5 | 1 | 450 (F3) | - | 2.130 | 2,1 | 25,5 |
| | 2 | 410 (F2) | - | 2.120 | 2,2 | 23,0 |
| RB-6 | 1 | 490 (F4) | | 2.330 | 0,6 | 21,0 |

EP 4 101 823 A1

(fortgesetzt)

| Mischung | Nr. | Ausbreitmaß nach 5 Minuten [mm] | Ausbreitmaß nach 30 Minuten [mm] | Frischrohdichte [kg/m$^3$] | Luftporengehalt [%] | Frischtemperatur [°C] |
|---|---|---|---|---|---|---|
| | 2 | - | 230 (F1) | 2.350 | 1,8 | 34,9 |

**Ergebnisse der Festbaustoffeigenschaften**

Im Rahmen der Festbaustoffeigenschaften wurden für die Baustoffzusammensetzungen RC-4.3 und RC-5 sowie den Referenzbeton RB-6 die Druckfestigkeit nach DIN EN 12390-3 [R14] und der Elastizitätsmodul nach DIN EN 12390-13 [R15] jeweils im Alter von 7 und 28 Tagen geprüft.

Die Eigenschaften des aufbereiteten Bauschutts (Recycling-Gesteinskörnung) variieren naturgemäß in der Zusammensetzung. Daher ist die Eingrenzung der Haupt- und Nebenbestandteile eine wichtige Voraussetzung für genügend gleichmäßige und damit kalkulierbare Eigenschaften. Recycling-Gesteinskörnungen für Beton müssen grundsätzlich nach ihrer Herkunft sowie der anteiligen stofflichen Zusammensetzung den Anforderungen der DIN EN 12620 [3] genügen **(Tabelle 17).**

| **Tabelle 17:** Bestandteile recyclierter Gesteinskörnung nach DIN EN 12620 [3] und deren Beschreibung Bestandteil | Beschreibung |
|---|---|
| RC | Beton, Betonprodukte, Mörtel Mauersteine aus Beton |
| RU | Ungebundene Gesteinskörner, Naturstein, hydraulisch gebundene Gesteinskörner |
| RB | Mauer- und Dachziegel aus gebranntem Ton Kalksandsteine Gasbetonsteine (nicht schwimmend) |
| RA | Bitumenhaltige Materialien |
| FL | Schwimmendes Material im Volumen |
| X | Sonstige Materialien: Bindige Materialien (d. h. Ton, Erde) Verschiedene sonstige Materialien: (eisenhaltige und nicht eisenhaltige) Metalle, nicht schwimmendes Holz, Kunststoff, Gummi Gips |
| G | Glas |

Allgemein werden im Stand der Technik folgende Korngruppen unterschieden:

- grobe Gesteinskörnungen, z.B. 4/8, 8/16, **RC 8/22;** 16/32

- feine Gesteinskörnungen, z.B. 0/1, 0/2, 0/4

- Korngemische, z.B. **RC 0/8,** 0/16, 0/32

- Füller (Gesteinsmehl), (D $\leq$ 0,063 mm)

Erfindungsgemäß werden die Korngemische RC 0/8 und RC 8/22 bevorzugt verwendet.

Korngemische sind Gemische aus feinen und groben Gesteinskörnungen, der Parameter d ist bei Korngemischen also stets Null. Die Sieblinien für die verschiedenen definierten Korngemische müssen in einem bestimmten Bereich liegen, der etwa dem Sieblinienbereich Typ 3 (grob- bis mittelkörnig) entspricht. Zu jedem Korngemisch sind in DIN EN 12620 zwei Zwischensiebe angegeben, für die ein bestimmter Siebdurchgang mit den vorgegebenen Grenzabweichungen (20 M.-%) einzuhalten ist.

Es wurde erkannt, dass wenn ein nicht bereits definiertes und geeignetes Korngemisch vorliegt, das zur Herstellung von Beton verwendet werden kann, so ist durch dosiertes Mischen von groben und feinen Gesteinskörnungen unter Umständen unter Zugabe von Füller ein Korngemisch herzustellen, d.h., es ist im Rahmen der Eignungsprüfung eine für den vorgesehenen Anwendungszweck geeignete betontechnologische Sieblinie anzustreben. Dies ist im Rahmen der technischen Lehre der Erfindung erfolgt, in dem festgestellt wurde, dass ein Ersatz von Naturgestein, wie Sand und Kies durch eine Gesteinskörnung erfolgt, die aus annähernd 100 % Bauwerksbruch Typ 3 und/oder Typ 2 besteht.

RC-Baustoffgemisch

Die Anforderungen an rezyklierte Gesteinskörnungen für Beton sind in DIN 4226-101 "Rezyklierte Gesteinskörnungen für Beton nach DIN EN 12620" geregelt. Hier sind in Abhängigkeit von der stofflichen Zusammensetzung vier Typen für RC-Gesteinskörnungen definiert.

Die Verwendung rezyklierter Gesteinskörnungen der Typen 1 und 2 nach dieser Norm und DIN EN 12620 ist in DIN EN 206-1 in Verbindung mit DIN 1045-2 unter Beachtung der DAfStbRichtlinie "Beton nach DIN EN 206-1 und DIN 1045-2 mit rezyklierten Gesteinskörnungen nach DIN EN 12620" geregelt.

Anwendungsbezogene bautechnische Anforderungen an die Typen 3 und 4 nach dieser Norm werden auf Grundlage der DIN EN 12620:2008-07 gesondert ausgewählt. Die erste Erfindungsidee bezieht sich bevorzugt auf die Verwendung einer rezyklierten Gesteinskörnung der Type 3, was einen Zuschlagstoff aus Bauwerksbruch mit einem hohen Anteil von Abfallstoffen schafft und trotzdem zu vollständig unerwarteten Eigenschaften eines daraus hergestellten RC-Betons führt.

Eine zweite Erfindungsidee bezieht sich bevorzugt auf die Verwendung einer rezyklierten Gesteinskörnung der Type 2, was die Verwendung von weniger mit Abfallstoffen belastetem Bauwerksbruch bedeutet.

Das gebrochene Material der Gesteinskörnungen wurde einem Dienstleistungsauftragnehmer zur Untersuchung übergeben.

Das angelieferte RC-Material wurde auf folgende Parameter untersucht:

1. Kornverteilung
2. Kornrohdichte
3. Wasseraufnahme
4. Stoffliche Zusammensetzung

Korngrößenverteilung

Die Korngrößenverteilung des RC-Materials wurde von verschiedenen Prüfstellen untersucht.

Bezüglich der Kornverteilung zeigten alle untersuchten Fraktionen eine stetige Sieblinie mit Über- und Unterkornanteilen im zulässigen Bereich gemäß DIN EN 12620. Allerdings sind Abweichungen zwischen den verschiedenen Aufbereitungszyklen festzustellen. Ein Beispiel eines Aufbereitungszyklus aus einem bestimmten Zeitraum zeigt eine deutlich feinere Kornverteilung in der Fraktion 0/8 sowie einen erhöhten Feinkornanteil in der Fraktion 8/22.

Kornrohdichte und Wasseraufnahme

Kornrohdichte und Wasseraufnahme wurden im Pyknometerverfahren nach DIN EN 1097-6 bzw. DIN 4226-100 bestimmt.

**Fazit:**

Es wird möglich sein, einen qualitätsgerechten Beton auch mit höheren Gehalten an rezyklierter Gesteinskörnung herzustellen, als derzeit zulässig. Damit überwindet die Erfindung ein bestehendes Vorurteil im Stand der Technik, denn vor dem Anmeldungszeitpunkt war es nicht für möglich gehalten worden, eine Baustoffzusammensetzung mit einer annähernd 100 % Gesteinskörnung aus Mauerwerksbruch zu einem leistungsfähigen Baustoff zu verarbeiten, der zu dem natürliche Ressourcen verwendenden Baustoff RB-6 nach Tabelle 16 konkurrenzfähig ist.

Hinsichtlich der Dimensionierung der Wände ergibt sich im allgemeinen Fall - im Vergleich zum Referenz-Betonbaustoff RB-6 - keine Erhöhung der Wanddicke. Im allgemeinen Fall wird von einer nahezu gleichmäßigen Auslastung der Wände und eine Regelmäßigkeit des Gebäudegrundrisses ausgegangen. So beträgt die Verformung einer Wand aus Beton C20/25, mit einer Dicke von 14 cm sowie einer Gebrauchslast am Wandkopf von 140 kN pro m 0, 14 mm und bei einer Wand aus Recyclingbeton 0,28 mm, wobei in der Überschlagsrechnung das Kriechen vernachlässigt wurde. Die Belastung entspricht in etwa einem 4- bis 5- stöckigem Gebäude mit Deckenspannweiten in Haupttragrichtung von 6 m. Die Verformungen von Wänden sind somit im Allgemeinen bautechnisch vernachlässigbar, selbst bei nicht gleichmäßiger Verteilung der Vertikallasten im Grundriss.

Vorteile der Erfindung:

Angesichts der drohenden zukünftigen Ressourcenknappheit von natürlichen Gesteinskörnungen, besonders von Natursand, bietet der Einsatz von rezyklierten Brechsanden ≤ 2mm umweltpolitisch hohes Potenzial, zudem auch aus technischen Gründen einer erweiterten Anwendung rezyklierter Gesteinskörnungen im Beton über die derzeitig gültigen nationalen Regelungen in der DAfStb-Richtlinie: Beton nach DIN EN 206-1 und DIN 1045-2 mit rezyklierten Gesteinskörnungen nach DIN EN 12620, hinaus nichts im Wege steht

Weiteren Überlegungen zu gesonderten Bemessungsregeln liegen folgende Festlegungen zugrunde:

- der Anwendungsbereich bezieht sich auf Stahlbetoninnenwände des üblichen Hochbaus,

- die Wände werden als Fertigteilwände im Fertigteilwerk vorgefertigt,

- die Stahlbetoninnenwände dienen als Ersatz für Wände aus Mauerwerk,

- es wird mindestens eine Betonfestigkeitsklasse C20/25 angestrebt,

- Rezepturen der RC-100-Betone/GK Typ 2 mit der rezyklierten Gesteinskörnung Kategorie Typ 2 haben einen maximalen w/z-Wert von 0,6 und einen Mindestzementgehalt von 300 kg/m³,

- Rezepturen der RC-100-Betone/GK Typ 3 mit der rezyklierten Gesteinskörnung Kategorie Typ 3 haben einen maximalen w/z-Wert von 0,5 und einen Mindestzementgehalt von 360 kg/m³.

Beide Rezepturen sind unter Anderem Gegenstand des unabhängigen Patentanspruchs 1.

Als Ergebnis der Untersuchungen konnte folgendes festgestellt werden:
Das Trag- und Verformungsverhalten von untersuchten Recyclingbetonen mit 100 % rezyklierter Gesteinskörnung 0/22 ist durch Modifikation der Regelungen gemäß DIN EN 1992-1-1 beschreibbar, dabei werden die Materialkennwerte eines Betons der Festigkeitsklasse C20/25 in Bezug genommen.

Die untersuchten RC-100-Betone mit den festgelegten Rezepturen unter Anwendung der rezyklierten Gesteinskörnungen des Typs 2 und Typs 3 genügen aufgrund der Untersuchungsergebnisse den Festigkeits- und Verformungsanforderungen zur Herstellung von Innenwänden in Fertigteilbauweise als Ersatz für Mauerwerk unter Beachtung der Modifizierung für E-Modul, Kriechzahl und Trockenschwinddehnungen. Die Erfindung sieht auch eine vorgegebene und definierte Mischung der Gesteinskörnungen vom Typ 3 und Typ 2 vor.

**Datenblatt der erfindungsgemäßen "Büscher-Wand"**

Das ist eine Massivbauwand nach dem Gegenstand des unabhängigen Patentanspruchs 13.

**1. Angaben zur RC-Gesteinskörnung:**

1.1 Zusammensetzung gem. DIN 4226-101

☐ Klassifizierung **Typ 3 wie folgt**
☐ Ungewaschenes Bruchmaterial
☐ Anteil Ziegelmauerstein/Klinker... Rb ≤ **50 %**
☐ Anteil Bitumen, Asphalt... Ra ≤ **5 %**
☐ Gips X ≤ **1 %**

1.2 Sieblinie Prüfung nach DIN 933-1

☐ Größtkorn ≤ **22 mm**
☐ Sieblinienbereich gem. DAfStb Heft 400 Typ **3**
☐ Zusammensetzung aus mindestens 2 Korngruppen

1.3. Wasseraufnahme

☐ DAfStb-Rili BRez, Anhang B nach 10 Minuten: ≤ **6,0 %**
☐ DIN EN 1097-6 nach 24 Stunden ≤ **8,0 %**

1.4. Rohdichte
☐ DIN EN 1097-6 ≥ **2,0 t/m³**

## 2. Angaben zur Betonzusammensetzung:

1.1 Zement:

☐ Zementart nach DIN EN 197-1 **CEM I / CEM II A-S**
☐ Zementfestigkeitsklasse **52,5**
☐ Zementgehalt pro m³ **360 kg**

2.2. Zugabewasser:
☐ DIN EN 1008

2.3. Zusatzmittel
☐ Fließmittel (FM) DIN EN 934-2

## 3. Frisch- und Festbetoneigenschaften/Bemessungskennwerte

☐ Wasserzementwert w/z ≤ **0,5**
☐ Konsistenzbereich F3/C3 **420 - 550 mm**
☐ Betongüte ≥ **C 20/25**
☐ Frostwiderstand DIN CEN/TS 12390-9 < **1000 g/m³**
☐ E-Modul Absenkung zu Normalbeton - **45%**
☐ Endkriechzahl für Bemessung Faktor zu Normalbeton ***1,5**
☐ Schwinddehnung $\varepsilon_{cd\,(t)} = 2,5 * \beta_{ds(t,ts)} * k_h * \varepsilon_{cd,0}$

## 4. Grenzabmessungen der Büscher-Wand

☐ Wandstärken ≥ **10 cm**
☐ Wandhöhe ≤ **3,70 m**
☐ Wandlänge ≤ **11,00 m**

Verfahrensablauf bei der Herstellung von Innenwandelementen aus RC-Beton

In einer Vorsortierung werden Stör- und Fremdstoffe mit einem Sortiergreifer aussortiert und dem jeweiligen Verwertungsverfahren zugeführt. Folgende Anlieferungen sind für den Brechvorgang für den Einsatz in "Büscherwänden" gesperrt und werden ins Rohstofflager für eine anderweitige Verwertung gefahren:

- Asphalt, Bitumen (erlaubter Anteil < 5%)

- gipshaltige Materialien (erlaubter Anteil < 1%)

- Humus / Böden

- Schadstoff- undefinierbare Fremdstoffe

- bei Zweifel

Der Bruch erfolgt per Brechanlage mit zugeschaltetem Magneten zur Entfernung von Metall/Eisen, sowie einem Windsichter zur Entfernung von leichten Störstoffen (z. B. Papier/Folienstückchen).
Das Material aus dem Rohstofflager wird aufbereitet, sobald die Mengenschwelle von ca. 3.000 Tonnen erreicht ist. Die Aufbereitungsdauer liegt bei ca. 4-7 Tagen. Die Mengenerfassung der Aufbereitung ist in der Software dokumentiert. Die Siebanlage ist der Brechanlage nachgeschaltet. Die speziellen Siebe werden geräteabhängig eingesetzt mit dem Ziel, aus den gesiebten Korngruppen den angegebenen zulässigen Körnungsaufbau der rezyklierten Gesteinskörnungen (Sieblinienbereich: AB 0-22) zu erreichen. Es werden mindestens zwei Korngruppen KG1 und KG2 hergestellt. Damit die Materialprüfungen Ergebnisse über den gesamten Aufbereitungszeitraum darstellen. ist folgende Probeentnahme festgelegt: Alle 2 Stunden werden ca. 3 kg rezyklierte Gesteinskörnung pro Korngröße aus dem Siebgut entnommen und in Big-Bags für die Probeentnahme der Materialprüfungen gesammelt.

Sichtkontrolle der Korngröße und Abgleich mit Rückstellproben. Das Überkorn> 22 mm wird in den Brechvorgang zurückgeführt.

Die rezyklierte Gesteinskörnung wird, getrennt nach Korngruppen KG1 und KG2 aus den frei gegebenen Lagerchargen mit dem Radlader in die vorgegebenen Boxen der sternförmigen Siloanlage verfahren. Zur Vermeidung von Schwankungen der Kernfeuchtigkeit wird die rezyklierte Gesteinskörnung vor allem bei trockenen Witterungsverhältnissen mit Wassersprengern befeuchtet: Die Dosierung der rezyklierten Gesteinskörnungen erfolgt im wassergesättigten Zustand (wie Wasseraufnahme nach 24 SundervW24). Mittels automatischer Schrapperanlage wird die rezyklierte Gesteinskörnung aus dem Sternlager in das Vorratssilo für die Dosierung transportiert. Die Zusatzmittel werden in IBC-Containern angeliefert und gemäß Lieferantenangabe eingelagert.

Der Zement wird mittels Silofahrzeugen lose angeliefert und in Hochsilos für die Produktion bevorratet. Die Wasserzugabe erfolgt aus genehmigter und jährlich. hinsichtlich Betoneignung geprüfter Grundwasserentnahme. Die Herkunft.

Materialkennungen. Menge und Qualität des Zementes und des Zusatzmittels wird durch die Lieferscheinkontrolle bei der Warenannahme geprüft.

Grundlage der Dosierung von 1 m$^3$ ist die beim DIBt hinterlegte Zusammensetzung des erfindungsgemäßen Baustoffs (109-neu). Die Mengeneingaben der recyclierten Gesteinskörnung erfolgt im wassergesättigten Zustand. Die Dosierung aller verwendeten Materialien erfolgt vollautomatisch über die Maschinen- und Feuchtigkeitssteuerung der Mischanlage. Die Genauigkeit der Einwaagen wird über die Eingabe der maximal erlaubten Verwiegungstoleranzen für jede einzelne Komponente in den Maschinenparametern gesichert und erfolgt über eine Grob- und Feindosierung. Die Wasserdosierung erfolgt über eine regelmäßig kalibrierte Wasseruhr. Das Wasser wird unter ca. 34 bar mittels vier fein versprühenden Dosierventilen, die sich im Mischerdeckel befinden, gleichmäßig über den gesamten Mischertrog verteilt zugeführt. Ein Wassernachlauf nach Erreichen der Zielfeuchtigkeit der Mischung ist durch spezielle Ventile gesichert, welche sich bei Druckabfall (z Dosierende) verschließen. Die Wasserdosierung erfolgt mittels einer Grobwasserzugabe und anschließender Feinwasserzugabe bis die Zielfeuchtigkeit erreicht ist.

Die recyclierte Gesteinskörnung, der Zement und die Zusatzmittel werden über regelmäßig kalibrierte Waagen in einen Aufzugkübel dosiert und von dort dem Mischer zugeführt. Die Dosierung der Gesteinskörnung erfolgt nacheinander von der Grobkörnung zur Feinkörnung, damit eine Restlosentleerung des Aufzugkübels gewährleistet ist. Bei Überschreitung der vorgegebenen Einwaagetoleranzen aller Komponenten stoppt der Dosiervorgang. Die Mischung wird entsorgt und dem Recyclingprozess zugeführt. Zur Einhaltung einer Mindest-Baustofftemperatur für die Winterproduktion können die Ausgangstemperaturen des Zugabewassers (durch einen Durchlauferhitzer) und der recyclierten Gesteinskörnung (durch Bedampfung der Vorratssilos) angepasst werden. Bei der Herstellung unter höheren Außentemperaturen wird die Temperatur der Baustoffmischung durch Nutzung der Verdunstungskälte im Vorratslager der recyclierten Gesteinskörnung reduziert und die Verarbeitbarkeit gesichert. Die dosierten Materialmengen werden nach dem Mischungsende im Mischerrechner gespeichert (Ist-/Soll-Einwaagen pro Komponente) und werden dort archiviert.

Die Anmischung des Baustoffs erfolgt in einem Zwangsmischer mit Bodenauslass mit einem Volumen von bis zu 1 m$^3$ Fertigbeton. Die Übereinstimmung der hinterlegten Rezepturdaten mit den Sollvorgaben, wird vor der Produktionsaufnahme kontrolliert.

Im Mischprozess wird unter Einsatz von Bodensonden nach der Trockenmischzeit die Ausgangsfeuchtigkeit und die Temperatur der Baustoffmischung gemessen. Die Zugabewassermenge für die Zielfeuchtigkeit wird vollautomatisch anhand der hinterlegten Mischparameterdaten berechnet und dosiert. Bei Überschreitung der chargenabhängig angegebenen maximalen Zugabewassermenge stoppt die Mischanlage, der Fehler wird angezeigt: Die Mischung wird entsorgt und dem Recyclingprozess zugeführt. Durch eine Sichtöffnung im Mischerdeckel wird die Mischungshomogenität und die Verarbeitbarkeit einer Sichtkontrolle unterzogen (MF). Wenn die Zielfeuchtigkeit der Mischung erreicht ist, werden die Feuchtigkeitsdaten, die berechnete Soll-Zugabewassermenge, die dosierte Zugabewassermenge, die Mischungstemperatur, und die Spannungswerte pro Mischer zusammen mit den Rohstoff-Dosierdaten gespeichert und archiviert.

Vor dem Produktionsstart der "Büscher-Wände" wird der Zustand der Mischanlage durch Sichtkontrollen (Reinigung, Abnutzung der Mischerpaddel, Höhe der Mischerpaddel über dem Mischerboden) und technische Funktionskontrollen (z. B. Verschlussfunktion der Wasser-Zugabedüsen im Mischerdeckel, Restlosentleerung, der Waagen...) geprüft. Das Mischen erfolgt anhand festgelegter Mischerparameter für die Büscher-Wände vollautomatisch unter Einsatz modernster Steuerungstechnik. Die Mischerparameter sind speziell für den Baustoff Büscher-Wände eingefahren und eingestellt: Für Mischungsgrößen von 500 l bis 1.000 l. Temperaturkurven sind hinterlegt, Mischzeiten (Trocken- und Nassmischzeiten) sind optimiert vorgegeben, die maximale chargenabhängige Zugabewassermenge und der Wasser- Zementwert ist eingegeben, die Dosierabfolge der einzelnen Rohstoffe in den Mischer optimiert festgelegt.

Der Baustoff wird bei laufendem Rührwerk aus dem Mischer durch eine im Boden befindliche Mischerschiebeklappe mit geringer Fallhöhe in einen schienengeführten Transportkübel übergeben. An verschiedenen Übergabestellen in der Fertigungshalle wird die Baustoffmischung aus dem schienengeführten Transportkübel in die krangeführten Transportsilos mit einem Fassungsvermögen von 1.000 l bis 2.000 l unter Beachtung geringer Fallhöhen als Absicherung gegen Entmischungen, übergeben. Sollten bei der Übergabe optisch Mängel an der Verarbeitbarkeit sichtbar werden, wird die Mischung entsorgt und dem Recyclingprozess zugeführt.

Die Fertigung der Büscherwand (Massivbauwand) erfolgt liegend oder stehend in Stahl oder in Holzformen, gemäß den Schal- und Fertigungsplänen aus der Arbeitsvorbereitung. Die Abmessungen der Augenschalungen werden vor der Freigabe zur Befüllung von der Fertigungsleitung geprüft und freigegeben.

Nach der erteilten Freigabe für die Befüllung durch die Fertigungsleitung wird die Baustoffmischung maximal 30 Minuten nach der Herstellung im Mischer eingebaut, aus dem Betonsilo mit minimaler Fallhöhe in die Form eingefüllt und gleichmäßig verteilt. Die Befüllung wird ausschließlich von qualifiziertem Personal ausgeführt. Bei Baustoffmengen über 1 m³ erfolgen die erforderlichen Mischungen immer direkt hintereinander.

Für einen geringen Luftporengehalt der Mischung wird die Mischung je nach Formenabmessung, mittels Innen- und/oder Außenrüttler fachgerecht entlüftet und verdichtet. Die Bauteilhöhe wird durch Abziehen der überschüssigen Baustoffmischung mit einer Glättlatte hergestellt. Die Glättlatte wird dabei mit Querbewegungen über die vorab geprüften und freigegebenen Schalungsoberkanten geführt.

Die Schalung ist durch Magnetsysteme oder Holzverkeilungen gegen Formveränderungen oder Formverschiebungen während der Befüllung, Verdichtung und Aushärtung gesichert. Alle Schalungsfugen- und Übergänge werden mit Silikon flüssigkeitsdicht abgedichtet. Die Berührungsflächen der Schalhaut mit der Baustoffmischung werden durch eine Behandlung mit einem auf die Materialien abgestimmten Trennmittel versehen, damit Anhaftungen ausgeschlossen werden und eine optimale Entschalung mit gleichmäßigen Bauteiloberflächen gewährleistet ist. Das Trennmittel wird als feiner Sprühnebel aufgegeben, Trennmittelansammlungen führen zu Flecken in der Bauteiloberfläche und sind durch Auswischen zu beseitigen. Zementwert (ist 0,49 < max. WZ = 0,5) ist eingegeben, die Dosierabfolge der einzelnen Rohstoffe in den Mischer ist optimiert festgelegt.

Die Verweildauer des Bauteils in der Schalung beträgt i. d. R. ca. 10 h. Die Freigabe zur Entschalung durch die Fertigungsleitung erfolgt, wenn die Druckfestigkeit des Bauteils mindestens 15 N/mm2 beträgt. Die Druckfestigkeit wird mittels Schmidthammer ermittelt. Die Rahmenschalung, die Aussparungsschalungen für Türen und Fenster, Faskantenleisten, Fixierungen von Einbauteilen etc. werden soweit erforderlich, sorgsam ohne das Bauteil zu beschädigen, entfernt. Die zum Transportsystem zugehörigen zugelassenen Seilschlaufen oder Abheber werden durch den Anschläger befestigt und über geprüfte und zugelassene Kettentragsysteme direkt oder über zwischengeschaltete Traversen mit dem Hubwerk der Krananlagen verbunden. Der Kran transportiert das Bauteil zum Nachbearbeitungsplatz.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, könnten als erfindungswesentlich beansprucht werden, soweit sie einzeln oder in Kombination gegenüber dem Stand der Technik neu sind. Die Verwendung der Begriffe "wesentlich" oder "erfindungsgemäß" oder "erfindungswesentlich" ist subjektiv und impliziert nicht, dass die so benannten Merkmale zwangsläufig Bestandteil eines oder mehrerer Patentansprüche sein müssen.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:

Figur 1:    Blockschema des anfänglichen Verfahrensablaufes bei der Herstellung von Innenwandelementen mit dem RC-Beton

Figur 2:    Anschluss an das Blockschema nach Figur 1 zur Herstellung von Innenwandelementen mit dem RC-Beton

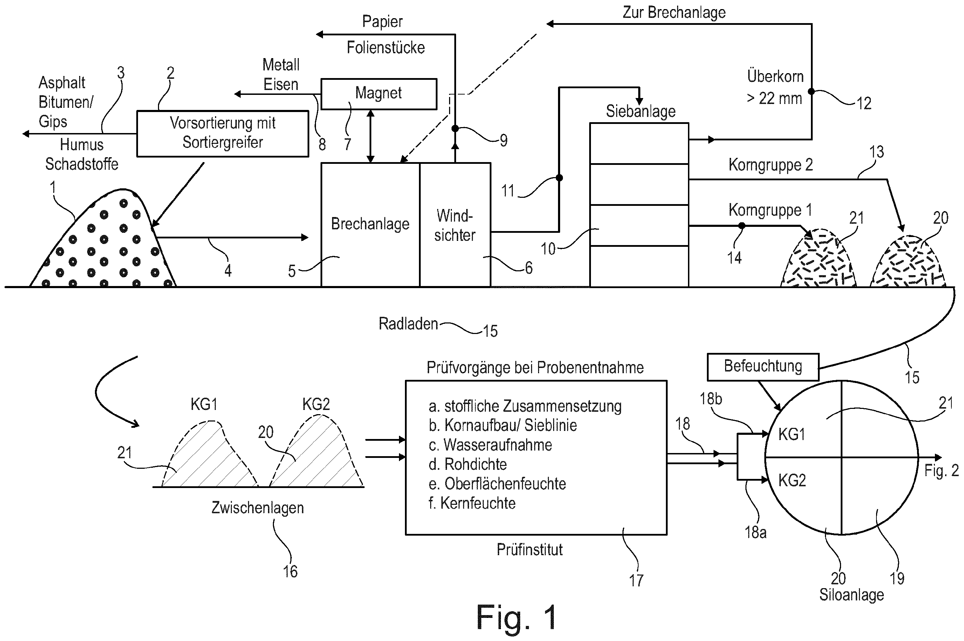

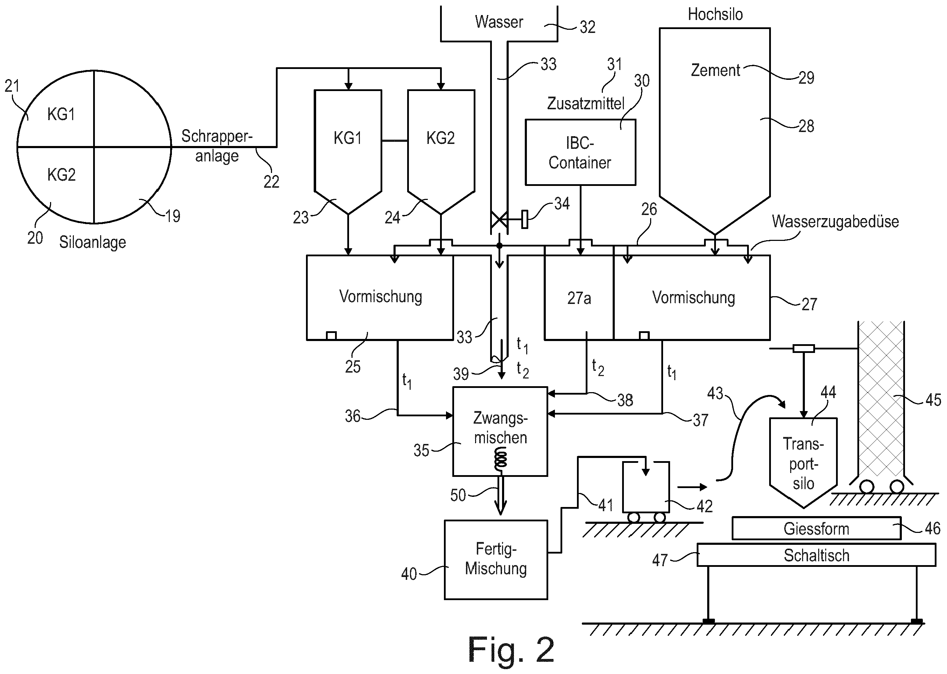

In den Figuren 1 und 2 sind schematisiert die Verfahrensabläufe bei der Herstellung von Innenwandelementen mit dem erfindungsgemäßen RC-Beton dargestellt.

Der Bauschutt 1 für die Verwendung in Büscher-Wänden wird separat von Bauschutt für anderweitige Verwendung eingelagert. Es erfolgt eine Vorsortierung mit einem Sortiergreifer 2, bei der Stör- und Fremdstoffe aussortiert werden und in Pfeilrichtung 3 einer anderweitigen Verwendung zugeführt werden. Es sind dies vor allem die Stoffe Asphalt, gipshaltige Materialien, Humus/Böden, Schadstoffe, undefinierbare Fremdstoffe und alle zweifelhaften Stoffe.

Nach erfolgter Vorsortierung des Bauschutts 1 folgt ein Weitertransport in Pfeilrichtung 4 in eine Brechanlage 5, der gleichzeitig Magnete 7 zur Entfernung von Metall/Eisen zugeschaltet sind. In der Brechanlage 5 ist auch ein Windsichter 6 vorhanden, der zur Entfernung von leichten Störstoffen (z. B. Papier/Folienstücke) in Pfeilrichtung 9 dient.

Das vom Magneten 7 aufgesammelte Material wird in Pfeilrichtung 8 entfernt.

Nach dem Zerkleinern des Materials in der Brechanlage 5 wird es in Pfeilrichtung 11 einer Siebanlage 10 zugeführt, wo eine Anzahl von Sieben vorhanden ist und erfindungsgemäß die Korngruppe 21 (KG1) in Pfeilrichtung 14 getrennt gelagert wird im Vergleich zu der Korngruppe 20 (KG2), die in Pfeilrichtung 13 aus der Siebanlage 10 ausgeschleust wird.

Ein eventuell gewonnenes Überkorn mit einer Korngröße von größer als 22 mm wird in Pfeilrichtung 12 wieder der Brechanlage 5 zurückgeführt.

Die getrennt gelagerten Korngruppen 20, 21 werden mit einem Radlager 15 in ein Zwischenlager 16 gebracht, wo sie zu Zwecken der Prüfung von einer Prüfinstanz 17 überprüft werden.

Diese Prüfinstanz 17 kann beispielsweise ein Prüfinstitut sein, welches folgende Prüfvorgänge vornimmt:

a) stoffliche Zusammensetzung
b) Kornaufbau/Sieblinie
c) Wasseraufnahme
d) Rohdichte
e) Oberflächenfeuchte
f) Kernfeuchte

Nach erfolgter Freigabe der beiden Korngruppen 20, 21 werden diese über die Förderwege 18a und 18b getrennt in einer Siloanlage 19 abgelagert. Aus der Siloanlage 19 werden - in Fortsetzung des Blockschaltbildes auf Figur 2 - die Korngruppen 20, 21 über eine Schrapperanlage 22 in getrennte Silos 23, 24 gefördert. Der gesteuerte Auslauf des Silos 23, 24 mündet in eine Vormischung 25, wo die beiden Korngruppen entsprechend der erfindungsgemäßen Zusammensetzung der Gesteinskörnung vorgemischt werden.

Über die Wasserzugabeleitung 26 wird dosiert Wasser in die Vormischung 25 zugeführt. Das Wasser 32 fließt über die Leitung 33 und das Ventil 34 in die Wasserzugabeleitung 26 zeitlich und volumenmäßig gesteuert.

Zur Vermeidung von Schwankungen der Kernfeuchtigkeit wird die recyclierte Gesteinskörnung vor allem bei trockenen Witterungsverhältnissen mit Wassersprengern befeuchtet. Die Dosierung der recyclierten Gesteinskörnung erfolgt im wassergesättigten Zustand.

Das Zusatzmittel 31 wird in IBC-Containern 30 angeliefert und gemäß Lieferantenangabe eingelagert. Der Zement 29 wird mittels Silofahrzeugen angeliefert und in einem Hochsilo 28 für die Produktion bevorratet.

Grundlage der Dosierung eines Kubikmeters von RC-Beton ist die erfindungsgemäße Zusammensetzung des Baustoffs (z. B. mit der Bezeichnung 109-neu). Die Mengeneingaben der recyclierten Gesteinskörnung 21, 22 erfolgt im wassergesättigten Zustand. Die Dosierung der verwendeten Materialien erfolgt automatisch, wobei in der Vormischung 27, 27a eine Vermischung des Zusatzmittels mit dem Zement unter Zugabe von Wasser erfolgt.

Zu einem ersten Zeitpunkt t1 wird die Vormischung 27 in Pfeilrichtung 37 in den Zwangsmischer 35 befördert, wobei zum gleichen Zeitpunkt t1 in Pfeilrichtung 36 die vorgemischte, wassergesättigte Gesteinskörnung 21, 22 zugeführt wird.

Gleichzeitig erfolgt eine weitere Wasserzugabe zum Zeitpunkt t1 in Pfeilrichtung 39 von der Leitung 33.

Das Wasser wird unter ca. 3 bis 4 bar mittels vier fein versprühenden Dosierventilen, die sich im Mischerdeckel befinden, gleichmäßig über den gesamten Mischertrog verteilt zugeführt. Zu einem späteren Zeitpunkt t2 wird das Zusatzmittel in Pfeilrichtung 38 dem Zwangsmischer zugeführt, wobei nach der geforderten Mischzeit die recyclierte Gesteinskörnung, der Zement und die Zusatzmittel über regelmäßige kalibrierte Waagen in einen Aufzugkübel dosiert und von dort dem Zwangsmischer 35 zugeführt werden. Die Dosierung der Gesteinskörnung 20, 21 erfolgt nacheinander von der Grobkörnung zur Feinkörnung, damit eine Restlosentleerung des Aufzugkübels gewährleistet ist.

Der Bodenauslauf des Zwangsmischers 35 wird beispielsweise bei einer erzeugten Menge von 1 m³ Fertigbeton freigegeben, und der Fertigbeton wird in Pfeilrichtung 50 als Fertigmischung 40 in Pfeilrichtung 41 in den Kübel 42 geliefert. Der Kübel 42 ist bevorzugt schienengeführt und übergibt seine Ladung in ein krangeführtes Transportsilo 44, welches von der Krananlage 45 über die Gießform 46 bewegt wird. Die Übergabe vom Kübel 42 in das Transportsilo 44 erfolgt in Pfeilrichtung 43.

Die Fertigung der "Büscher-Wand" in der Gießform 46 erfolgt liegend oder stehend in Stahl- oder in Holzformen gemäß den Schal- und Fertigungsplänen aus der Arbeitsvorbereitung. Die Schalung ist durch Magnetsysteme oder Holzverkeilungen gegen Formveränderungen oder Formverschiebungen während der Befüllung, Verdichtung und Aushärtung gesichert. Die Gießform 46 liegt dabei auf einem Schaltisch 47 auf. Alle Schalungsfugen und Übergänge werden mit Silikon flüssigkeitsdicht abgedichtet. Nach erteilter Freigabe für die Befüllung durch die Fertigungsleitung wird die Baustoffmischung maximal 30 Minuten im Mischer eingebaut. Das Transportsilo 44 führt eine Befüllung mit minimaler Fallhöhe in die Gießform 46 aus.

Bei Baustoffmengen über 1 m³ erfolgen die erforderlichen Mischungen immer direkt hintereinander.

Für einen geringen Luftporengehalt der Mischung wird die Mischung je nach Formabmessung mittels Innen- oder Außenrüttler fachgerecht entlüftet und verdichtet. Die Verweildauer des Bauteils in der Schalung beträgt vorzugsweise ca. 10 Stunden. Danach werden die Rahmenschalungen, die Aussparungsschalungen für Türen und Fenster, Faskantenleisten, Fixierungen von Einbauteilen etc. entfernt.

Nach der Durchführung geeigneter Prüfvorgänge ist damit die Herstellung eines neuartigen Innenwandelementes beendet.

Eine erfindungsgemässe stoffliche Zusammensetzung wurde von der deutschen Bauaufsicht entsprechend der nachfolgenden Tabelle als Betonwerkstoff zugelassen

**Anforderungen der stofflichen Zusammensetzung nach der allgemeinen bauaufsichtlichen Zulassung/ Allgemeine Bauartgenehmigung Nr. Z-3.51-2184**

Die stoffliche Zusammensetzung muss nach DIN EN 933-11 bestimmt werden.

Tabelle 18 - Anforderungen an die stoffliche Zusammensetzung gem. Z-3.51-2184 der bauaufsichtlichen Zulassung

| Lfd. Nr. | Bestandteil | Kategorie | Anforderungen gem. allg. bauaufs. Zulassung Z-3.51-2184 |
|---|---|---|---|
| | | | [Gew.-%] |
| 1 | Beton, Betonprodukte, Mörtel, Mauersteine aus Beton | $Rc$ | $RCU_{45} \geq 45$ |
| 2 | Ungebundene Gesteinskörnung, Naturstein, hydraulisch gebundene Gesteinskörnung | $R_u$ | |
| 3 | Ziegel-Mauersteine (nicht prosiert), Klinker, Steinzeug, Kalksandstein-Mauersteine, Verschiedene Mauer- und Dachziegel, Bimsbeton (Leichtbeton), nicht schwimmender Poren beton | $R_b$ | $Rb_{50\text{-}} \leq 50$ |
| 4 | Bitumenhaltige Materialien, Asphalt | $Ra$ | $Ra_5 \leq 5$ |
| 5 | Glas | $R_g$ | $X\ Rg_{2\text{-}} \leq 2$ |
| 6 | Sonstige Materialien | $X$ | |
| 7 | Schwimmendes Material im Volumen | $FL$ | $FL_2 \leq 2$ |

Damit konnte erstmals ein Zuschlagstoff für Beton und Verwendung von Beton-Recyclat als Zuschlagstoff für Beton bestehend aus Bauwerksbruch mit einer Gesteinskörnung 20, 21 definierter Größe geschaffen werden, der dadurch gekennzeichnet ist, dass der Zuschlagstoff ein mindestens teilweiser Ersatz von Naturgestein, wie Sand und Kies ist und aus 50 bis 100 % Bauwerksbruch, bevorzugt 80 bis 100 %, besonders bevorzugt 100 % des Typs 2 oder des Typs 3 besteht.

**Zeichnungslegende**

| 1 | Bauschutt |
|---|---|
| 2 | Sortiergreifer |
| 3 | Pfeilrichtung |
| 4 | Pfeilrichtung |
| 5 | Brechanlage |
| 6 | Windsichter |
| 7 | Magnet |
| 8 | Pfeilrichtung |
| 9 | Pfeilrichtung |
| 10 | Siebanlage |
| 11 | Pfeilrichtung |
| 12 | Pfeilrichtung |
| 13 | Pfeilrichtung |
| 14 | Pfeilrichtung |
| 15 | Radlager |
| 16 | Zwischenlager |

| 17 | Prüfinstanz |
|----|-------------|
| 18 | Pfeilrichtung 18a, 18b |
| 19 | Siloanlage |
| 20 | Korngruppe KG2 |
| 21 | Korngruppe KG1 |
| 22 | Schrapperanlage |
| 23 | Silo |
| 24 | Silo |
| 25 | Vormischung (Körnung) |
| 26 | Wasserzugabeleitung |
| 27 | Vormischung 27a |
| 28 | Hochsilo |
| 29 | Zement |
| 30 | Container |
| 31 | Zusatzmittel |
| 32 | Wasser |
| 33 | Leitung |
| 34 | Ventil |
| 35 | Zwangsmischer |
| 36 | Pfeilrichtung |
| 37 | Pfeilrichtung |
| 38 | Pfeilrichtung |
| 39 | Pfeilrichtung |
| 40 | Fertigmischung |
| 41 | Pfeilrichtung |
| 42 | Kübel |
| 43 | Pfeilrichtung |
| 44 | Transportsilo |
| 45 | Krananlage |
| 46 | Giessform |
| 47 | Schaltisch |
| 48 49 50 | Pfeilrichtung |

**Patentansprüche**

1. Zuschlagstoff für Beton und Verwendung von Beton-Recyclat als Zuschlagstoff für Beton bestehend aus Bauwerksbruch mit einer Gesteinskörnung (20, 21) definierter Größe **dadurch gekennzeichnet, dass** der Zuschlagstoff ein mindestens teilweiser Ersatz von Naturgestein, wie Sand und Kies ist und aus 50 bis 100 % Bauwerksbruch, bevorzugt 80 bis 100 %, besonders bevorzugt 100 % des Typs 2 oder des Typs 3 besteht.

2. Zuschlagstoff nach Anspruch 1, **dadurch gekennzeichnet, dass** der Bauwerksbruch

   1. aus einer Mischung von Korngruppen entsprechend der Korngruppe RC 0/8 und der Korngruppe RC 8/22 oder
   2. aus der Gesteinskörnung vom Typ 3 in Alleinstellung besteht.

3. Zuschlagstoff für Beton und Verwendung von Beton-Recyclat als Zuschlagstoff für Beton bestehend aus der folgenden Stoffen und **gekennzeichnet durch** folgende Merkmale:

   3.1 rezyklierte Gesteinskörnung (20, 21) mit der stofflichen Zusammensetzung bevorzugt nach DIN 4226-101
   3.2 Klassifizierung Typ 3
   3.3 Ungewaschenes Bruchmaterial
   3.4 Anteil Ziegelmauerstein/Klinker... $Rb \leq 50$ %
   3.5 Anteil Bitumen, Asphalt... $Ra \leq 5$ %
   3.6 Anteil Gips $X \leq 1$ %
   3.7 Sieblinie Prüfung bevorzugt nach DIN 933-1
   3.8 Größtkorn $\leq 22$ mm
   3.9 Sieblinienbereich bevorzugt gem. DAfStb Heft 400 3

3.10 Zusammensetzung aus mindestens 2 Korngruppen KG1 und KG2 (20, 21)

**4.** Zuschlagstoff nach einem der Ansprüche 1 bis 3, **dadurch gekennzeichnet, dass** er eine Rohdichte von $\geq 2,0$ t/m$^3$ bevorzugt nach DIN EN 1097-6 hat.

**5.** Zuschlagstoff nach einem der Ansprüche 1 bis 4, **dadurch gekennzeichnet, dass** seine Wasseraufnahme bevorzugt nach DAfStb-Richtlinie [R17], Anhang B nach 10 Minuten $\leq 6,0$ % beträgt und bevorzugt nach DIN EN 1097-6 [R10] nach 24 Stunden
$\leq 8,0$ %

**6.** Zuschlagstoff nach einem der Ansprüche 1 bis 5, **dadurch gekennzeichnet, dass** die Aufbereitung des Bauschutts (1) gebrochen und fraktioniert erfolgt und dass vorwiegend die Gesteinskörnungen des Typs RC 0/8 und RC 8/22 verwendet werden.

**7.** Zuschlagstoff nach einem der Ansprüche 1 bis 6, **dadurch gekennzeichnet, dass** pro Kubikmeter einer RC-Baustoffzusammensetzung

die erste Gesteinskörnung (21) der Korngruppe RC 0/8 entspricht und einen Stoffraum von 303,8 [dm$^3$/m$^3$], eine Trockenmasse von 742 [kg/m$^3$] und eine Feuchtmasse von 831 [kg/m$^3$] aufweist und dass

die zweite Gesteinskörnung (20) der Korngruppe RC 8/22 entspricht und einen Stoffraum von 371,4 [dm$^3$/m$^3$], eine Trockenmasse von 868 [kg/m$^3$] und eine Feuchtmasse von 903 [kg/m$^3$] aufweist.

**8.** Baustoff insbesondere zur Herstellung von Innenwandelementen unter Verwendung eines Zuschlagstoffes nach mindestens einem der Ansprüche 1 bis 7, **gekennzeichnet durch** folgende Merkmale:

8.1 Zementart bevorzugt nach DIN EN 197-1 [R3] CEM I oder CEM II/A-s ist
8.2 Zementfestigkeitsklasse 52,5,
8.3 Zementgehalt 360 kg/m3
8.4 Zugabewasser bevorzugt nach DIN EN 1008 [R9]
8.5 Zusatzmittel bevorzugt nach DIN EN 934-2 [R8] Fließmittel (FM)

**9.** Baustoff nach Anspruch 8, **gekennzeichnet durch** folgende Eigenschaften des Frisch- und Feststoffbaustoffs:

9.1 Wasserzementwert w/z 0,50
9.2 Konsistenzbereich, bevorzugt geprüft nach DIN EN 12350-5 [R11] F3, 420 bis 550 mm
9.3 Baustoffdruckfestigkeit 28 d, bevorzugt geprüft nach DIN EN 12390-3 [R14] $\geq$ C20/25
9.4 Frostwiderstand, bevorzugt geprüft nach DIN CEN/TS 12390-9 [R16] < 1.000 g/m3
9.5 Elastizitätsmodul (Abminderung zu Normalbeton) - 45 %
9.6 Endkriechzahl für Bemessung (Faktor zu Normalbeton) · 1,5

**10.** Baustoff nach einem der Ansprüche 8 oder 9, **dadurch gekennzeichnet, dass** er bevorzugt den Anforderungen der DIN EN 206-1 entspricht.

**11.** Baustoff nach einem der Ansprüche 8 bis 10, **dadurch gekennzeichnet, dass** er folgende Parameter aufweist.

| Baustoff | | Stoffraum [dm$^3$/m$^3$] | Masse trocken [kg/m$^3$] | Masse feucht [kg/m$^3$] | Oberflächenfeuchte [%] | Wasser [kg/m$^3$] |
|---|---|---|---|---|---|---|
| Zement | CEM II/A-S 52,5 R | 116,1 | 360 | 360 | | |
| Zugabewasser | | 176,0 | 176 | 52 | | 52 |
| Zusatzmittel | MasterEase 5020 | 2,69 | 2,88 | 2,88 | | |
| Gesteinskörnung | **RC 0/8** | 303,8 | 742 | 831 | 12,0 | 89 |

(fortgesetzt)

| Baustoff | | Stoffraum [dm$^3$/m$^3$] | Masse trocken [kg/m$^3$] | Masse feucht [kg/m$^3$] | Oberflächenfeuchte [%] | Wasser [kg/m$^3$] |
|---|---|---|---|---|---|---|
| | **RC 8/22** | 371,4 | 868 | 903 | 4,0 | 35 |
| Luftporen | | 30,0 | | | | |
| Summe | | 1.000 | 2.149 | 2.149 | | 176 |

**12.** Baustoff nach einem der Ansprüche 8 bis 11, **dadurch gekennzeichnet, dass** pro Kubikmeter eines Baustoffs den Gesteinskörnungen des Typs RC 0/8 und RC 8/22 noch zusätzlich folgende weiteren Gesteinskörnungen in einem bestimmten Mengenverhältnis beigefügt sind:

12.1 Gesteinskörnungen 0/8 und 8/22 aus Gitterziegel,
12.2 Gesteinskörnungen aus Dachziegel 0/8 und 8/22,
12.3 Gesteinskörnungen aus Kalksandstein 0/8 und 8/22
12.4 Asphaltbruch.

**13.** Massivbauwand bevorzugt nach DIN EN 206-1 und DIN 1045-2 mit einem ressourcenschonenden Baustoff, insbesondere Innenwandelement, **dadurch gekennzeichnet, dass** die verwendete Gesteinskörnung (20, 21) annähernd zu 100 % aus Bauwerksbruch Typ 2 und/oder Typ 3 bevorzugt nach DIN 4226-101 besteht.

**14.** Massivbauwand nach Anspruch 13, **dadurch gekennzeichnet, dass** seine Bauteilfunktion für nichttragende und tragende Innenwände ausgelegt ist,

14.1 dass die Herstellung im Betonfertigteilwerk erfolgt
14.2 dass die Wandstärke $\geq$ 0,10 m beträgt
14.3 die Wandhöhe $\leq$ 3,70 m beträgt
14.4 und die Wandlänge $\leq$ 11,00 m beträgt

**15.** Verfahren zur Herstellung von Massivbauwänden mit einem Gießwerkstoff, insbesondere zur Herstellung von Innenwandelementen, **dadurch gekennzeichnet, dass** die verwendete Gesteinskörnung (20,21) zu annähernd aus 100 % Bauwerksbruch besteht und dass auf natürliche Ressourcen wie Sand und Kies verzichtet wird.

Fig. 1

EP 4 101 823 A1

Hochsilo — Zement — 29 — 28

Wasserzugabedüse — Wasserzugabedüse — 26

Vormischung — 27 — 27a

45

Transportsilo — 44

43

Giessform — 46

Schaltisch — 47

42

41

$t_1$ — 37

$t_2$ — 38

Zwangsmischen — 35

FertigMischung — 40

50

Zusatzmittel — 30 — IBC-Container — 31

Wasser — 32 — 33 — 34

KG2 — 24

KG1 — 23

Vormischung — 25

$t_1$ — 36

$t_1$ $t_2$ — 33 — 39

Schrapperanlage — 22

KG1 — 21

KG2 — 20

Siloanlage — 19

**Fig. 2**

Europäisches
Patentamt

European
Patent Office

Office européen
des brevets

**EUROPÄISCHER RECHERCHENBERICHT**

Nummer der Anmeldung

**EP 22 17 8302**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Wecobis: "Rezyklierte Gesteinskörnung", , 2. Mai 2018 (2018-05-02), XP055972467, Gefunden im Internet: URL:https://www.wecobis.de/bauproduktgruppen/grundstoffe-gs/gesteinskoernung-gs/rezyklierte-gesteinskoernung.html [gefunden am 2022-10-18] * das ganze Dokument * ----- | 1,2,6 | INV. C04B20/00 C04B28/04 C04B103/00 C04B111/00 |
| X | Yaser Seyed ET AL: "International Journal of Innovative Technology and Exploring Engineering (IJITEE) ISSN: 2278-3075, Volume 4 Issue-2, July 2014 Performance of Concrete Walls with Waste and Recycling Materials for Industrial Building Systems", , 2. Juli 2014 (2014-07-02), XP055972677, Gefunden im Internet: URL:https://www.ijitee.org/wp-content/uploads/papers/v4i2/B1727074214.pdf [gefunden am 2022-10-19] * das ganze Dokument * ----- | 13-15 | |
| X | Typ: "Eigenschaft Kategorie der Gesteinskörnung", , 31. Oktober 2019 (2019-10-31), XP055972665, Gefunden im Internet: URL:https://www.betontechnische-daten.de/sites/default/files/assets/document/btd_2017_tabellen_2.4.1.pdf [gefunden am 2022-10-19] * das ganze Dokument * ----- | 1,4-7 | |

RECHERCHIERTE SACHGEBIETE (IPC)

C04B

-/--

Der vorliegende Recherchenbericht wurde für alle Patentansprüche erstellt

| Recherchenort | Abschlußdatum der Recherche | Prüfer |
|---|---|---|
| München | 19. Oktober 2022 | Roesky, Rainer |

EPO FORM 1503 03.82 (P04C03)

Europäisches
Patentamt

European
Patent Office

Office européen
des brevets

# EUROPÄISCHER RECHERCHENBERICHT

**Nummer der Anmeldung**

**EP 22 17 8302**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | FALEK K ET AL: "Influence of recycled aggregates on the mechanical and tribological behavior of concrete", ENERGY PROCEDIA, Bd. 139, 31. Dezember 2017 (2017-12-31), Seiten 456-461, XP085327504, ISSN: 1876-6102, DOI: 10.1016/J.EGYPRO.2017.11.237 * das ganze Dokument *<br>----- | 3,8-12 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 19. Oktober 2022 | Roesky, Rainer |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202018105762 U1
- DE 20001754 U1
- DE 202015100064 U1
- CH 687875 A5
- DE 102018120331 B3

**In der Beschreibung aufgeführte Nicht-Patentliteratur**

- **RESCHKE.** Thorsten: Verwendung von Beton mit rezyklierten Gesteinskörnungen bei Verkehrswasserbauten. *Bautechnische und geotechnische Aspekte beim Schleusenbau,* 2011, (93), 40-60
- *Druckschrift Beton:Wiki: Rezyklierte Gesteinskörnung,* vol. 22 (11), 221, https://www.beton.wiki/index-php?title=Rezyklierte Gesteinskörnung